(19)

Europäisches Patentamt

European Patent Office

Office européen des brevets

(11) **EP 4 063 914 A1**

(12) **EUROPEAN PATENT APPLICATION**
published in accordance with Art. 153(4) EPC

(43) Date of publication:
**28.09.2022   Bulletin 2022/39**

(51) International Patent Classification (IPC):
*G01S 17/89* *(2020.01)*

(21) Application number: **20889866.8**

(52) Cooperative Patent Classification (CPC):
**G01S 17/87; G01S 17/89; G01S 17/93; H04N 5/232; H04N 5/341; H04N 5/374**

(22) Date of filing: **12.11.2020**

(86) International application number:
**PCT/JP2020/042211**

(87) International publication number:
**WO 2021/100593 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **19.11.2019   JP 2019208374**

(71) Applicant: **Sony Group Corporation**
**Tokyo 108-0075 (JP)**

(72) Inventor: **ICHIKI, Shoji**
**Tokyo 108-0075 (JP)**

(74) Representative: **Witte, Weller & Partner**
**Patentanwälte mbB**
**Postfach 10 54 62**
**70047 Stuttgart (DE)**

(54)   **RANGING DEVICE AND RANGING METHOD**

(57)   A distance measuring device according to an embodiment of the present disclosure includes a distance measurement unit that calculates distance data indicating a distance to an object and a signal processing unit that also serves as a reliability calculation unit that calculates reliability of distance data, a motion detector that detects a motion of the object; and a correction unit that corrects the distance data or reliability based on a detection result by the motion detector.

## FIG.1

**Description**

Field

The present disclosure relates to a distance measuring device and a distance measuring method.

Background

In recent years, the autonomous movement of movable bodies such as delivery robots and drones has attracted attention. In order for the movable body to autonomously move, it is necessary to continuously measure a distance between the movable body itself and an object around the movable body, and to generate an environmental map for formulating a moving route.

Citation List

Patent Literature

Patent Literature 1: JP 2019-75826 A

Summary

Technical Problem

In the case of measuring the distance between the movable body and the object around the movable body, the certainty of the distance measurement result may not be sufficiently verified depending on the relative moving speed of the movable body and the object. In this case, a correct environmental map cannot be generated.
In view of the above circumstances, the present disclosure provides a distance measuring device and a distance measuring method capable of correcting a distance measurement result.

Solution to Problem

A distance measuring device according to one aspect of the present disclosure includes: a distance measurement unit that calculates distance data indicating a distance to an object; a reliability calculation unit that calculates reliability of the distance data; a motion detector that detects a motion of the object; and a correction unit that corrects the distance data or the reliability based on a detection result by the motion detector.
A distance measuring method according to one aspect of the present disclosure includes: calculating distance data indicating a distance to an object; calculating reliability of the distance data; detecting a motion of the object; and correcting the distance data or the reliability based on a detection result of the motion of the object.

Brief Description of Drawings

FIG. 1 is a functional block diagram of an example for explaining functions of a distance measuring device according to a first embodiment of the present disclosure.
FIG. 2 is a block diagram illustrating a configuration of an example of a distance measurement sensor applicable to the first embodiment.
FIG. 3 is a time chart for explaining an operation of an example of a distance measurement sensor applicable to the first embodiment.
FIG. 4 is a block diagram illustrating a configuration of an example of a motion detection sensor applicable to the first embodiment.
FIG. 5 is a block diagram illustrating a configuration of an example of a solid-state imaging element included in a motion detection sensor applicable to the first embodiment.
FIG. 6 is a block diagram illustrating a configuration of an example of a pixel of a solid-state imaging element applicable to the first embodiment.
FIG. 7 is a circuit diagram of an example illustrating details of a pixel of a solid-state imaging element applicable to the first embodiment.
FIG. 8 is a circuit diagram of an example illustrating an address event detector in a pixel of a solid-state imaging element applicable to the first embodiment.

FIG. 9 is a diagram for describing an operation of an address event detector applicable to the first embodiment.

FIG. 10 is a flowchart illustrating an example of a distance measuring method according to the first embodiment.

FIG. 11 is a schematic diagram illustrating an example of a depth map generated by a distance measurement sensor applicable to the first embodiment.

FIG. 12 is a schematic diagram illustrating an example of a reliability map generated based on a depth map.

FIG. 13 is a schematic diagram illustrating an example of a corrected reliability map obtained by correcting the reliability map using a detection result from a motion detection sensor applicable to the first embodiment.

FIG. 14A is an explanatory view for explaining a distance measuring method according to a comparative example.

FIG. 14B is an explanatory view for explaining a distance measuring method according to a comparative example.

FIG. 15A is an explanatory view for explaining a distance measuring method according to a comparative example.

FIG. 15B is an explanatory view for explaining a distance measuring method according to a comparative example.

FIG. 16 is an explanatory diagram for explaining an effect of the distance measuring method according to the first embodiment.

FIG. 17 is an explanatory diagram for explaining a modification of the distance measuring method according to the first embodiment.

FIG. 18 is a functional block diagram of an example for explaining functions of a distance measuring device according to a second embodiment.

FIG. 19 is a functional block diagram of an example for explaining functions of a distance measuring device according to a third embodiment.

FIG. 20 is a block diagram illustrating an example of a schematic configuration of a vehicle control system to which the technology according to the present disclosure can be applied.

FIG. 21 is an explanatory diagram illustrating an example of installation positions of a vehicle-exterior information detector and an imaging unit.

Description of Embodiments

Hereinafter, non-limiting exemplary embodiments of the present disclosure will be described with reference to the accompanying drawings. In the following embodiments, the same or corresponding parts or components are denoted by the same or corresponding reference numerals, and redundant description is omitted.

(First embodiment)

[Configuration of distance measuring device according to first embodiment]

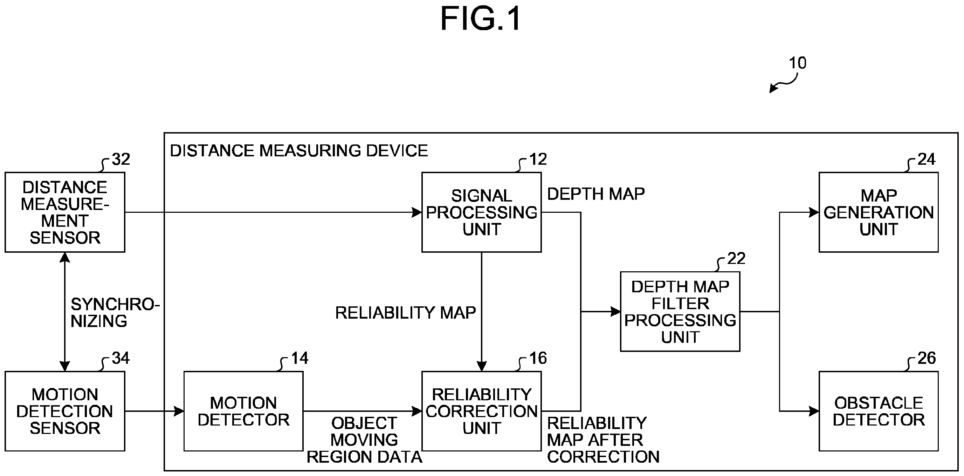

FIG. 1 is a functional block diagram of an example for explaining functions of a distance measuring device according to a first embodiment of the present disclosure. This distance measuring device can measure a distance between a movable body and an object around the movable body. In addition, the distance measuring device can also formulate a moving route of the movable body based on a measurement result.

As illustrated in FIG. 1, a distance measuring device 10 includes a signal processing unit 12, a motion detector 14, and a reliability correction unit 16. In addition, the distance measuring device 10 according to the present embodiment is provided with a depth map filter processing unit 22, a map generation unit 24, and an obstacle detector 26. Furthermore, in the present embodiment, a distance measurement sensor 32 and a motion detection sensor 34 are electrically connected to the distance measuring device 10.

In FIG. 1, a distance measurement sensor 32 is an indirect time-of-flight (iToF) sensor that performs distance measurement by an iToF method to output distance information. The distance information output from the distance measurement sensor 32 is input to the distance measuring device 10 and supplied to the signal processing unit 12. The signal processing unit 12 generates a depth map based on the distance information supplied from the distance measurement sensor 32 and generates a reliability map indicating the reliability of the depth map. The depth map generated by the signal processing unit 12 is supplied to the depth map filter processing unit 22. In addition, the reliability map generated by the signal processing unit 12 is supplied to the reliability correction unit 16.

The motion detection sensor 34 detects a motion of an object in a region corresponding to a distance measurement region of distance measurement sensor 32. Information (motion information) regarding the motion of the object detected by the motion detection sensor 34 is supplied to the motion detector 14. Based on the motion information supplied from the motion detection sensor 34, the motion detector 14 detects a region of an object moving in a distance measurement region of the distance measurement sensor 32. The motion detector 14 supplies data (object moving region data) indicating the moving region (object moving region) of the moving object detected based on the motion information to the reliability correction unit 16.

The reliability correction unit 16 corrects the reliability map supplied from the signal processing unit 12 based on the object moving region data supplied from the motion detector 14. For example, the reliability correction unit 16 corrects the reliability map by changing the reliability of the region corresponding to the object moving region data in the reliability map to lower reliability. The present invention is not limited thereto, and the reliability correction unit 16 may attach a tag indicating the fact to the object moving region. The reliability correction unit 16 supplies the corrected reliability map, which is the reliability map after correction, to the depth map filter processing unit 22.

The depth map filter processing unit 22 performs a filter process based on the corrected reliability map supplied from the reliability correction unit 16 on the depth map supplied from the signal processing unit 12. For example, the depth map filter processing unit 22 performs a filter process of converting the depth map into a format for reducing the influence of the object based on the corrected reliability map.

For example, the depth map filter processing unit 22 performs a filter process of setting the depth value of the object moving region as invalid data on the depth map based on the corrected reliability map. The filtered depth map subjected to the filter process by the depth map filter processing unit 22 is supplied to the map generation unit 24 and the obstacle detector 26.

The map generation unit 24 generates an environmental map based on the filtered depth map supplied from the depth map filter processing unit 22. In addition, the obstacle detector 26 detects an obstacle based on the filtered depth map supplied from the depth map filter processing unit 22. The obstacle detector 26 can further generate control information for, for example, planning an action and shifting the plan to an actual action based on the detected obstacle.

As described above, according to the distance measuring device 10 according to the first embodiment, the reliability map based on the distance measurement result is corrected by the object moving region data based on the result of the motion detection, and the depth map is corrected using the corrected reliability map. Therefore, it is possible to appropriately deal with the occurrence of motion blur depending on the relative speed between the distance measuring device 10 (distance measurement sensor 32) and the object.

Hereinafter, each unit of the distance measuring device 10 will be described in detail.

<Configuration and operation of distance measurement sensor>

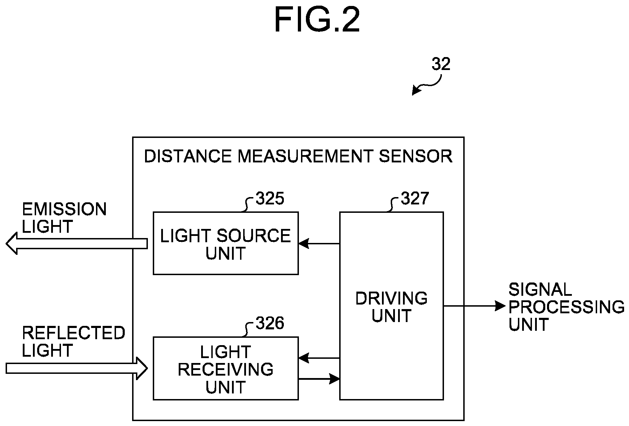

Next, the configuration and operation of the distance measurement sensor 32 applicable to the first embodiment will be described. FIG. 2 is a block diagram illustrating a configuration of an example of the distance measurement sensor 32 applicable to the first embodiment. In FIG. 2, the distance measurement sensor 32 includes a light source unit 325, a light receiving unit 326, and a driving unit 327. The light source unit 325 includes a light emitting element that emits light having a wavelength in an infrared region or a near-infrared region. Examples of such a light emitting element include an infrared light emitting diode (LED), a face emitting infrared light semiconductor laser (VCSEL) array element, and the like. The light receiving unit 326 includes a pixel array in which a plurality of pixels each including a light receiving element having sensitivity to light in an infrared region emitted from the light source unit 325 is disposed in a matrix.

The driving unit 327 generates a light source driving signal for driving the light source unit 325 based on the control signal supplied from the distance measuring device 10 to output the generated light source driving signal to the light source unit 325. The light source driving signal may be a signal modulated into a pulse wave having a predetermined duty ratio by pulse width modulation (PWM). The frequency of the light source driving signal as a pulse wave may be, for example, 20 to 3 MHz or about 100 MHz. The light source unit 325 receives a light source driving signal from the driving unit 327, and emits light at the predetermined duty ratio based on the light source driving signal.

Furthermore, the driving unit 327 generates a light reception driving signal for driving the light receiving unit 326 in addition to the light source driving signal to output the generated light reception driving signal to the light receiving unit 326. The light reception driving signal includes a plurality of light reception pulse signals having the same duty ratio as that of the light source driving signal and having the same phase and different phases with respect to the light source driving signal. In the present embodiment, the driving unit 327 outputs four light reception pulse signals having phase differences of 0°, 90°, 180°, and 270° with respect to the light source driving signal to the light receiving unit 326. The light receiving unit 326 receives a light reception driving signal from the driving unit 327, and operates based on the light reception driving signal as described later.

<Operation of signal processing unit>

Next, the signal processing unit 12 (FIG. 1) of the distance measuring device 10 will be described. The signal processing unit 12 receives a distance measurement signal from the distance measurement sensor 32, performs a predetermined process on the received distance measurement signal, and calculates distance data indicating a distance to an object.

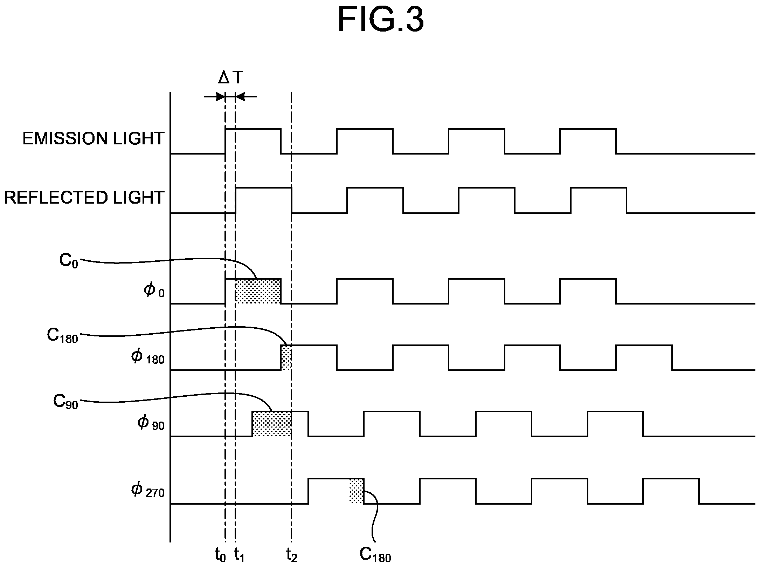

Specifically, as illustrated in FIG. 3, when emission light is emitted from the light source unit 325 (FIG. 2), the emission light is reflected by an object around the movable body and received by the light receiving unit 326 as reflected light. This reflected light reaches the light receiving unit 326 later than the emission light due to the flight time of the light by a predetermined time $\Delta T(t_0-t_1)$. As a result, a charge corresponding to the reflected light for one pulse of the emission light is generated in the light receiving unit 326. Here, the light reception pulse signal $\phi_0$ (phase difference 0°) synchronized with the emission light is input to the light receiving unit 326, and accordingly, among the generated charges, the charge amount $C_0$ corresponding to the overlapping period between the light receiving period ($t_1$-$t_2$) of the reflected light and the light reception pulse signal $\phi_0$ is output (as the distance measurement signal).

Similarly, the charge amount $C_{180}$ is output by the light reception pulse signal $\phi_{180}$ with the phase difference of 180°, the charge amount $C_{90}$ is output by the light reception pulse signal $\phi_{90}$ with the phase difference of 90°, and the charge amount $C_{270}$ is output by the light reception pulse signal $\phi_{270}$ with the phase difference of 270°.

Upon receiving the distance measurement signals from the distance measurement sensor 32, the signal processing unit 12 calculates distance data for these distance measurement signals according to the following equation. From the charge amounts $C_0$, $C_{180}$, $C_{90}$, and $C_{270}$, a difference I and a difference Q shown in Expressions (1) and (2) are obtained.

$$I = C_0 - C_{180} \tag{1}$$

$$Q = C_{90} - C_{270} \tag{2}$$

Furthermore, from these differences I and Q, the phase difference Phase ($0 \leq$ Phase $< 2\pi$) is calculated by Expression (3).

$$Phase = \tan^{-1}(Q/I) \tag{3}$$

From the above, the distance data Distance is calculated by Expression (4).

$$Distance = c \times Phase/4\pi f \tag{4}$$

where c represents the speed of light, and f represents the frequency of the emission light.

The signal processing unit 12 obtains the distance data Distance for each pixel and arranges the distance data Distance in an array corresponding to the pixel array, thereby generating a depth map indicating the relative distance between the movable body and the object around the movable body. The depth map is output to the depth map filter processing unit 22.

Furthermore, the signal processing unit 12 generates a reliability map indicating the certainty of the distance data by performing the process based on a predetermined algorithm on the distance data between pixels in the depth map. The reliability map is output from the signal processing unit 12 to the reliability correction unit 16.

Note that, since the sum of the above-described charge amounts $C_0$, $C_{180}$, $C_{90}$, and $C_{270}$ corresponds to the total charge amount generated in the pixel, the signal processing unit 12 can also form an image (luminance map) based on the sum.

<Configuration of motion detection sensor>

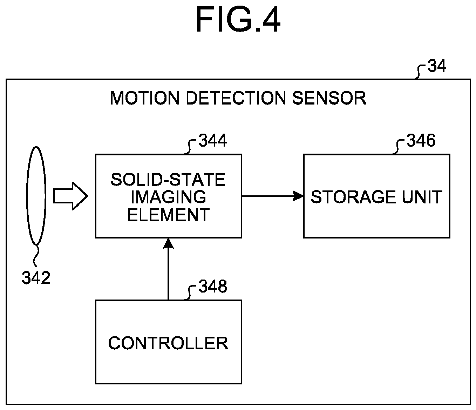

Next, the motion detection sensor 34 applicable to the first embodiment will be described with reference to FIGS. 4 to 9. In the first embodiment, a dynamic vision sensor (DVS) is applied as the motion detection sensor 34. Details of the DVS will be described later.

FIG. 4 is a block diagram illustrating a configuration of an example of the motion detection sensor 34 applicable to the first embodiment. The motion detection sensor 34 includes an optical system 342, a solid-state imaging element 344, a storage unit 346, and a controller 348. The optical system 342 includes one or a plurality of lenses and respective mechanisms such as an autofocus mechanism and a diaphragm mechanism, and guides light from an object to a light receiving face of the motion detection sensor 34.

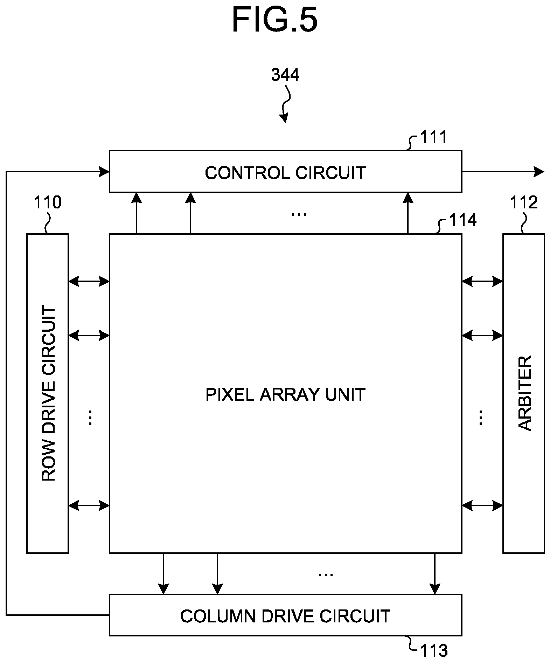

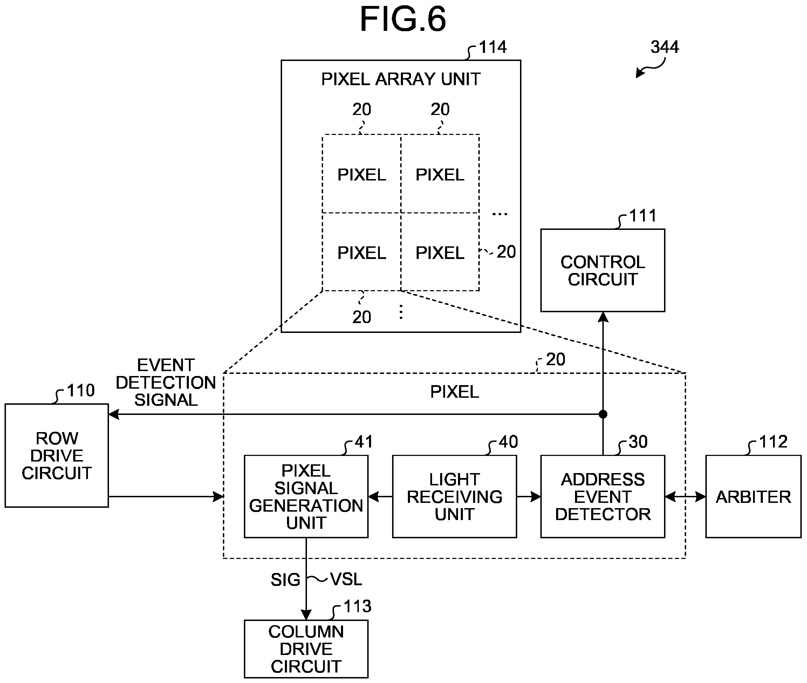

As illustrated in FIG. 5, the solid-state imaging element 344 includes a row drive circuit 110, a control circuit 111, an arbiter 112, a column drive circuit 113, and a pixel array unit 114. As will be described later with reference to FIG. 6, the pixel array unit 114 includes a plurality of pixels disposed in a matrix. The solid-state imaging element 344 outputs an event detection signal from a pixel, among the plurality of pixels, which has detected a luminance change.

The storage unit 346 stores the event detection signal output from the solid-state imaging element 344. The storage unit 346 can be realized by a nonvolatile storage medium such as a flash memory or a hard disk drive, or a volatile storage medium such as a dynamic random access memory (DRAM). The controller 348 includes, for example, a processor, and controls the solid-state imaging element 344 to cause the solid-state imaging element 344 to execute an imaging operation.

FIG. 5 is a block diagram illustrating a configuration of an example of the solid-state imaging element 344 applicable to the first embodiment. In FIG. 5, each of the pixels included in the pixel array unit 114 generates an analog signal corresponding to the amount of received light (received light amount) as a pixel signal. Furthermore, each of the pixels determines whether the amount of change in the amount of received light exceeds a predetermined threshold value to output a request to the arbiter 112 in a case where it is determined that the amount of change in the amount of received light exceeds the predetermined threshold value (in a case where occurrence of an address event is detected).

The arbiter 112 arbitrates the request from each pixel to transmit a response to the request to the pixel based on the arbitration result. The pixel that has received the response outputs an event detection signal indicating detection of occurrence of an address event to the row drive circuit 110 and the control circuit 111.

The row drive circuit 110 drives each of the pixels to cause each of them to output a pixel signal to the column drive circuit 113. The column drive circuit 113 includes an analog-to-digital converter (ADC) provided for each column and a drive circuit that scans the ADC provided for each column in the row direction. The column drive circuit 113 scans the ADCs in the row direction to output pixel signals, which are digital signals converted from analog signals by each ADC, in units of rows.

The pixel signal (digital signal) output from the column drive circuit 113 is output to the control circuit 111, and undergoes predetermined signal processes such as a correlated double sampling (CDS) process and an auto gain control (AGC) process. In addition, the control circuit 111 performs an image recognition process on the event detection signal. The control circuit 111 outputs data indicating a result of the processing and an event detection signal to the storage unit 346 (FIG. 4).

FIG. 6 is a block diagram illustrating an example of the pixel array unit 114. As illustrated in FIG. 6, the pixel array unit 114 includes a plurality of pixels 20 disposed in a matrix. Each pixel 20 includes an address event detector 30, a light receiving unit 40, and a pixel signal generation unit 41.

The light receiving unit 40 includes a light receiving element as described later, and photoelectrically converts incident light to generate a charge. Under the control of the row drive circuit 110, the light receiving unit 40 supplies the generated charge to either the pixel signal generation unit 41 or the address event detector 30.

The pixel signal generation unit 41 generates a signal with a voltage corresponding to the charge amount of the charge supplied from the light receiving unit 40 as a pixel signal SIG. The pixel signal generation unit 41 outputs the generated pixel signal SIG to the column drive circuit 113 via a vertical signal line VSL.

The address event detector 30 determines whether the amount of change in the charge supplied from the light receiving unit 40 exceeds a threshold value, and detects the presence or absence of an address event based on the determination result. For example, the address event detector 30 determines that the occurrence of an address event is detected when the amount of change in the charge exceeds a predetermined ON threshold value.

When detecting the occurrence of the address event, the address event detector 30 submits a request for transmission of an event detection signal indicating detection of the address event to the arbiter 112 (FIG. 6). When receiving a response to this request from the arbiter 112, the address event detector 30 outputs an address detection signal to the row drive circuit 110 and the control circuit 111.

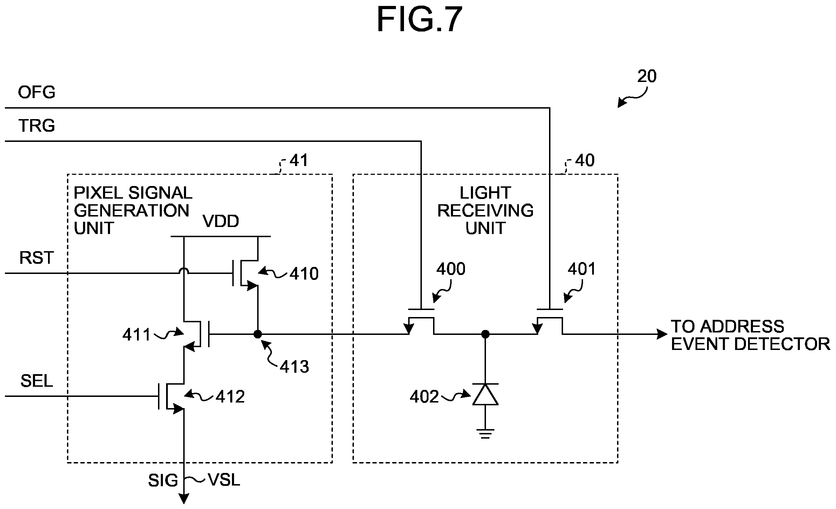

FIG. 7 is a circuit diagram of an example illustrating details of a pixel of the solid-state imaging element 344 applicable to the first embodiment. The specific configuration of the pixel signal generation unit 41 and the light receiving unit 40 will be described with reference to FIG. 7. The pixel signal generation unit 41 includes a reset transistor 410, an amplification transistor 411, a selection transistor 412, and a floating diffusion layer 413. The reset transistor 410, the amplification transistor 411, and the selection transistor 412 are realized by, for example, an N-type metal oxide semiconductor (MOS) transistor.

In the pixel signal generation unit 41, the floating diffusion layer 413 accumulates the charge and generates a voltage corresponding to the accumulated charge amount. The reset transistor 410 resets the floating diffusion layer 413 in accordance with a reset signal RST supplied from the row drive circuit 110. The amplification transistor 411 amplifies the voltage of the floating diffusion layer 413. In accordance with a selection signal SEL from the row drive circuit 110, the selection transistor 412 outputs a signal with the voltage amplified by the amplification transistor 411 as a pixel signal SIG to the column drive circuit 113 through the vertical signal line VSL.

The light receiving unit 40 includes a transfer transistor 400, an over flow gate (OFG) transistor 401, and a light receiving element 402. The transfer transistor 400 and the OFG transistor 401 are each realized by, for example, an N-type MOS transistor.

A transfer signal TRG is supplied from the row drive circuit 110 (FIG. 6) to the gate of the transfer transistor 400. A control signal OFG is supplied from the row drive circuit 110 to the gate of the OFG transistor 401. The light receiving element 402 photoelectrically converts incident light to generate a charge to output a photocurrent. When the transfer signal TRG is supplied, the transfer transistor 400 transfers the charge from the light receiving element 402 to the floating diffusion layer 413 of the pixel signal generation unit 41. When the control signal OFG is supplied, the OFG transistor 401 outputs the electrical signal generated by the light receiving element 402 to the address event detector 30.

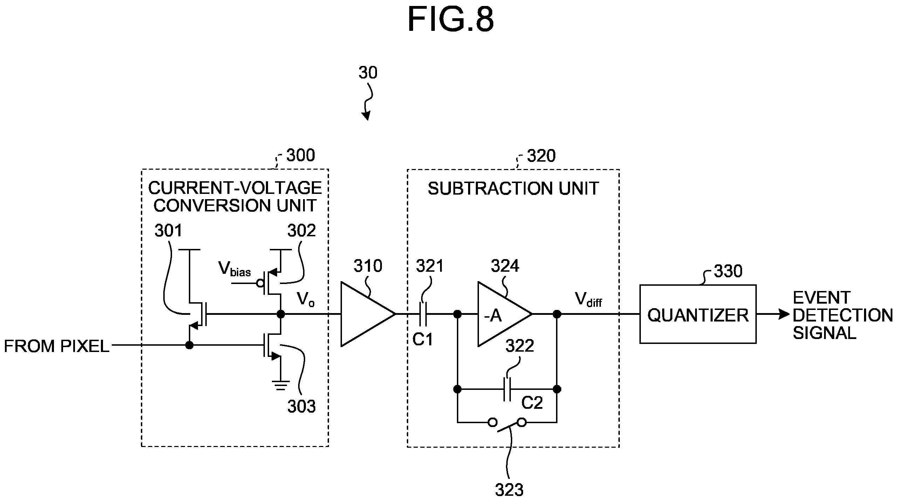

FIG. 8 is a circuit diagram of an example illustrating an address event detector in a pixel of a solid-state imaging element applicable to the first embodiment. As illustrated in FIG. 8, the address event detector 30 includes a current-voltage conversion unit 300, a buffer amplifier 310, a subtraction unit 320, and a quantizer 330.

The current-voltage conversion unit 300 includes transistors 301 and 303 that are N-type MOS transistors, and a transistor 302 that is a P-type MOS transistor. The source of the transistor 301 is connected to the drain of the OFG transistor 401 of the light receiving unit 40 illustrated in FIG. 7, and the drain of the transistor 301 is connected to the power supply terminal. The transistor 302 (P-type) and the transistor 303 (N-type) are connected in series between the power supply terminal and the ground terminal. Furthermore, a connection point between the drain of the transistor 302 and the drain of the transistor 303 is connected to the gate of the transistor 301 and the input terminal of the buffer amplifier 310. Furthermore, a predetermined bias voltage Vbias is applied to the gate of the transistor 302. Furthermore, the gate of the transistor 303 is connected to the source of the transistor 301 and the drain of the OFG transistor 401 of the light receiving unit 40.

The transistors 301 and 303, both of which are N-type, form source followers. The photocurrent output from the light receiving element 402 (FIG. 7) is converted into a logarithmic voltage signal by the two source followers connected in the loop shape. In addition, the transistor 302 outputs a constant current to the transistor 303.

The photocurrent output from the light receiving element 402 (FIG. 7) is converted into a voltage signal by the current-voltage conversion unit 300, and this voltage signal is then output to the subtraction unit 320 via the buffer amplifier 310.

The subtraction unit 320 includes a capacitor 321 having a capacitance C1, a capacitor 322 having a capacitance C2, a switch unit 323, and an inverter 324.

The capacitor 321 has one end (For convenience, it is referred to as an input end) connected to the output terminal of the buffer amplifier 310 and the other end (For convenience, it is referred to as an output end) connected to the input terminal of the inverter 324. The capacitor 322 is connected in parallel to the inverter 324. The switch unit 323 is switched between on and off according to the row driving signal. The inverter 324 inverts the voltage signal input via the capacitor 321. The inverter 324 outputs the inverted signal to the quantizer 330.

When the switch unit 323 is turned on, the voltage signal Vinit, which is an output signal of the buffer amplifier 310, is input to the input end of the capacitor 321, and the input end is a virtual ground terminal. The electric potential of the virtual ground terminal is set to zero for convenience. At this time, the charge Qinit accumulated in the capacitor 321 is expressed by the following Expression (5) based on the capacitance C1 of the capacitor 321. On the other hand, since both ends of the capacitor 322 are short-circuited by the switch unit 323, the accumulated charge is zero.

$$Qinit = C1 \times Vinit \qquad (5)$$

Next, it is assumed that the switch unit 323 is turned off and the voltage of the input end of the capacitor 321 changes to the Vafter. In this case, the charge Qafter accumulated in the capacitor 321 is expressed by the following Expression (6).

$$Qafter = C1 \times Vafter \qquad (6)$$

On the other hand, when the output voltage of the inverter 324 is the Vout, the charge Q2 accumulated in the capacitor 322 is expressed by the following Expression (7).

$$Q2 = -C2 \times Vout \qquad (7)$$

At this time, since the total charge amount of the capacitors 321 and 322 does not change, the relationship of the following Expression (8) is established.

$$Qinit = Qafter + Q2 \qquad (8)$$

The following Expression (9) is obtained from the Expressions (5) to (8).

$$Vout = -(C1/C2) \times (Vafter - Vinit) \qquad\qquad (9)$$

Expression (9) represents the subtraction operation of the voltage signal, and the gain of the subtraction result is the ratio C1/C2 of the capacitances of the capacitors 321 and 322. Normally, since it is desired to maximize the gain, it is preferable to design the capacitance C1 of the capacitor 321 to be large and the capacitance C2 of the capacitor 322 to be small. On the other hand, when the capacitance C2 of the capacitor 322 is too small, kTC noise increases, and noise characteristics may deteriorate. Therefore, the reduction in the capacitance C2 of the capacitor 322 is limited to a range in which noise can be tolerated. In addition, since the address event detector 30 including the subtraction unit 320 is mounted on each pixel 20, the capacitances C1 and C2 of the capacitors 321 and 322 have area restrictions. In consideration of these, the values of the capacitances C1 and C2 of the capacitors 321 and 322 are determined.

The quantizer 330 detects three states of (+) event, (-) event, and no event detection by using two threshold values of the ON threshold value and the OFF threshold value. Therefore, the quantizer 330 is referred to as a 1.5 bit quantizer.

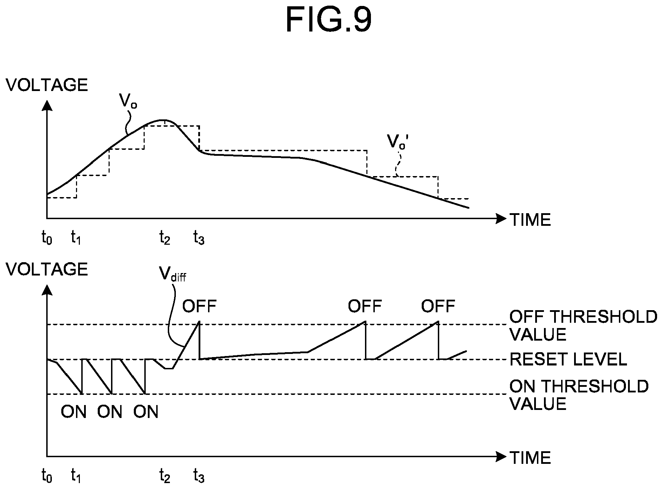

Next, the operation of the address event detector 30 having the above-described configuration will be described with reference to FIG. 9 in addition to FIG. 8. First, the switch unit 323 of the subtraction unit 320 is turned on, the capacitor 322 is reset, and the voltage Vdiff of the subtraction unit 320 is at a reset level. First, in a case where the amount of light received by the light receiving element 402 increases, when the switch unit 323 is turned off at time point t0 illustrated in FIG. 9, the output voltage Vo of the current-voltage conversion unit 300 increases. When the voltage Vdiff, which is a difference with respect to the reset level, exceeds the ON threshold value in the negative direction at time point t1, an event detection signal indicating (+) event detection is output from the quantizer 330. In response to this, the switch unit 323 is switched on by the row drive circuit 110, and the voltage Vdiff of the subtraction unit 320 returns to the reset level. The row drive circuit 110 turns off the switch unit 323 immediately after setting the voltage Vdiff of the subtraction unit 320 to the reset level. Such an operation is repeated while the amount of light received by the light receiving element 402 increases.

Next, when the amount of light received by the light receiving element 402 starts to decrease at time point t2, the output voltage Vo of the current-voltage conversion unit 300 also decreases. At time point t3, a difference between an output voltage Vo at that time point and an output voltage Vo when it is determined that a voltage exceeds the threshold value (in this case, the ON threshold value) immediately before time point t3 exceeds the OFF threshold value in the positive direction. Therefore, an event detection signal indicating (-) event detection is output from the quantizer 330. In response to this, the switch unit 323 is switched on by the row drive circuit 110, and the output of the subtraction unit 320 is set to the reset level. The row drive circuit 110 turns off the switch unit 323 immediately after setting the output of the subtraction unit 320 to the reset level.

As described above, the address event detector 30 can output an event detection signal according to a change in the amount of light received by the light receiving element 402 by comparing the difference between the output voltages Vo of the current-voltage conversion unit 300 with the ON threshold value and the OFF threshold value.

In FIG. 9, the voltage Vo' indicates the output voltage Vo of the current-voltage conversion unit 300 by a step function. It can be said that the quantizer 330 detects the rise and fall of the voltage Vo'.

<Operation of motion detection sensor>

In the motion detection sensor 34 having the above-described configuration, when an instruction to start detection of an address event is given by the controller 348 (FIG. 4), the row drive circuit 110 (FIGS. 5 and 6) turns on the OFG transistors 401 (FIG. 7) of all the pixels 20 by the control signal OFG. As a result, the charge generated in the light receiving element 402 is output to the address event detector 30.

In a certain pixel 20, when an address event is detected by the address event detector 30, the row drive circuit 110 turns off the OFG transistor 401 of the pixel 20. As a result, the supply of the charge from the light receiving element 402 to the address event detector 30 is stopped. Furthermore, the row drive circuit 110 turns on the transfer transistor 400 of the pixel 20 by the transfer signal TRG. As a result, the charge generated in the light receiving element 402 is transferred to the floating diffusion layer 413.

As described above, the solid-state imaging element 344 selectively outputs the charge generated by the pixel 20 that has detected the address event to the column drive circuit 113. That is, the event detection signal is output to the column drive circuit 113 only from the pixel 20 which has detected the address event without scanning all the pixels 20.

The event detection signal output to the column drive circuit 113 is output to the control circuit 111, is subjected to a predetermined process by the control circuit 111, and then is output to the storage unit 346 (FIG. 4) as an output signal of the solid-state imaging element 344. The output signal includes not only the event detection signal but also the position (coordinates) of the pixel 20 which has detected the occurrence of the address event (that is, the change in amount of light exceeding the predetermined threshold value has been detected), the time stamp indicating the time point of the detection, the polarity information indicating the direction (bright to dark, or dark to bright) of the change in the amount of light in the pixel 20, and the like.

In the motion detection sensor 34 to which the above-described DVS is applied, the event detection signal is output to the column drive circuit 113 only from the pixel 20 that has detected the address event without scanning all the pixels 20 of the solid-state imaging element 344. Therefore, the motion detection sensor 34 can detect the occurrence of the address event at a speed higher than that in a case where all the pixels are scanned. Specifically, the motion detection sensor 34 can operate at a speed comparable to that of the operation of the distance measurement sensor 32 described above. Furthermore, since the event detection signal is output to the column drive circuit 113 only from the pixel 20 which has detected the address event, the motion detector 14 can also exhibit effects such as reduction in power consumption of the solid-state imaging element 344 and a processing amount of image processes. In addition, the DVS also has characteristics of realization of high responsiveness to a movable body such as low latency, a low band, and a high dynamic range, low load cost, and environmental robustness.

<Operation of motion detector>

The motion detector 14 (FIG. 1) receives an output signal output from the solid-state imaging element 344 from the storage unit 346 of the motion detection sensor 34. Specifically, in synchronization with each light reception pulse signal output from the driving unit 327 to the light receiving unit 326 in the distance measurement sensor 32, the motion detection sensor 34 refers to the storage unit 346 and acquires the output signal, from the solid-state imaging element 344, stored in the storage unit 346. Thereafter, the motion detector 14 estimates the object moving region in the map of the pixels 20 based on the acquired output signal. When it is estimated that there is the object moving region, the motion detector 14 identifies the object moving region and generates the object moving region data.

<Operation of reliability correction unit>

The reliability correction unit 16 receives data related to the reliability map from the signal processing unit 12, and receives object moving region data from the motion detector 14. Based on these data, the reliability correction unit 16 combines the object moving region with the reliability map. Specifically, the position of the pixel corresponding to the object moving region is associated with the position of the pixel of the reliability map, and the value of the reliability of the pixel in the reliability map input from the signal processing unit 12 is lowered. For example, the reliability correction unit 16 may change the value of the reliability of the pixel to 0. Furthermore, the reliability correction unit 16 may attach a tag indicating that the pixel corresponds to the object moving region.

In this way, the reliability map corrected based on the object moving region detected by the motion detector 14 is obtained. The corrected reliability map is output to the depth map filter processing unit 22. For example, the depth map filter processing unit 22 performs a filter process of converting the depth map into a format for reducing the influence of the object based on the corrected reliability map. Furthermore, based on the processing result, the map generation unit 24 can generate an environmental map around the movable body on which the distance measuring device 10 is mounted, and the obstacle detector 26 can detect an obstacle around the movable body on which the distance measuring device 10 is mounted.

Note that, in the present embodiment, the number of pixels in the solid-state imaging element 344 in the motion detection sensor 34 is the same as the number of pixels in the pixel array of the light receiving unit 326 in the distance measurement sensor 32, and the plurality of former pixels and the plurality of latter pixels are associated in advance.

The operation and effect of the distance measuring device 10 configured as described above can be understood from the following description of the distance measuring method.

[Distance measuring method according to first embodiment]

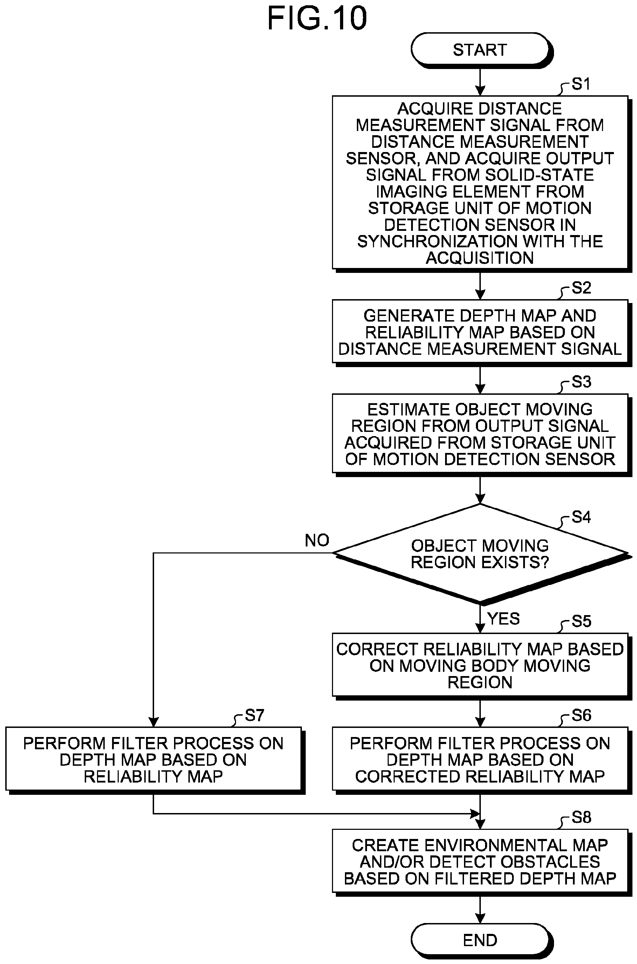

Next, a distance measuring method according to the first embodiment will be described with reference to FIG. 10. This distance measuring method can be performed using the above-described distance measuring device 10.

Referring to FIG. 10, first, the distance measurement signal from the distance measurement sensor 32 and the output signal from the motion detection sensor 34 are read in synchronization with each other (step S1). Specifically, when four light reception pulse signals $\phi_0$, $\phi_{180}$, $\phi_{90}$, and $\phi_{270}$ (FIG. 3) having phase differences of 0°, 180°, 90°, and 270°, respectively, from emission light are input to the light receiving unit 326 of the distance measurement sensor 32, a distance measurement signal corresponding to each light reception pulse signal is output to the signal processing unit 12. On the other hand, the motion detector 14 refers to the storage unit 346 of the motion detection sensor 34, and reads the output signal, from the solid-state imaging element 344, stored in the storage unit 346 in synchronization with the light reception pulse signal.

Next, in step S2, the signal processing unit 12 that has received the four distance measurement signals calculates distance data for each pixel, and generates a depth map in which the distance data is disposed corresponding to the pixel. In addition, not only the depth map but also the reliability map based on the distance data is generated by the signal processing unit 12. A reliability map is generated by obtaining the reliability of the distance data for each pixel according to a predetermined algorithm and disposing the obtained reliability in association with each pixel.

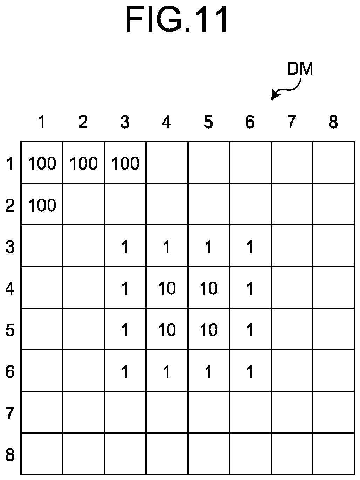

FIG. 11 is an explanatory diagram for explaining an example of a depth map generated by the signal processing unit 12. The depth map DM illustrated in FIG. 11 is a depth map of 8 rows and 8 columns for convenience of description, and each of the smallest (unit) quadrangles in the drawing indicates a pixel. The numerical value in each pixel represents, for example, distance data indicating a distance between a portion, captured by the pixel, of an object around the movable body on which the distance measuring device 10 is mounted and the movable body. In the example of FIG. 11, the distance data of the four pixels at the 4th row in 4th column, the 4th row in 5th column, the 5th row in 4th column, and the 5th row in 5th column is 10, and the distance data of each pixel of the 12 pixels around the above pixels, that is, pixels at the 3rd column, the 4th column, the 5th column, and the 6th column in the 3rd row, pixels at the 3rd column and the 6th column in the 4th row, pixels at the 3rd column and the 6th column in the 5th row, and pixels at the 3rd column, the 4th column, the 5th column, and the 6th column in the 6th row is 1. Furthermore, in the example of FIG. 11, only a portion is illustrated, but the distance data at other pixels is 100.

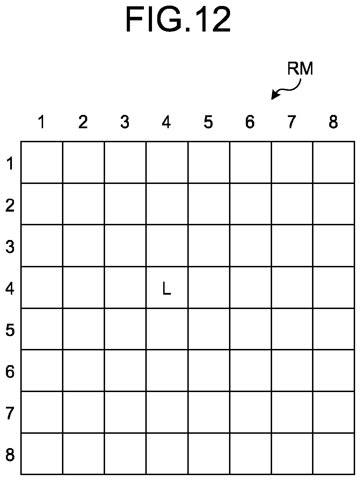

FIG. 12 is an explanatory diagram for explaining an example of a reliability map, generated by the signal processing unit 12, corresponding to the depth map DM of FIG. 11. In the illustrated reliability map RM, a result in which the reliability of the distance data of the pixel at the 4th row in the 4th column indicated by "L" is low and the reliability of the distance data of other pixels is high is obtained. That is, in the depth map DM of FIG. 11, since 8 pixels (the 3rd column in the 3rd row, the 4th column in the 3rd row, the 5th column in the 3rd row, the 6th column in the 3rd row, the 3rd column in the 4th row, the 6th column in the 4th row, the 3rd column in the 5th row, the 6th column in the 5th row, the 3rd column in the 6th row, the 4th column in the 6th row, the 5th column in the 6th row, and the 6th column in the 6th row) have distance data lower than the distance data of the surrounding pixels, it can be estimated that the reliability is low, but it is determined that the reliability is not low as long as the reliability is based on the distance data calculated by the signal processing unit 12 (as described above, step S2).

Returning to FIG. 10, following step S2 (or in parallel with step S2), in step S3, the motion detector 14 estimates the object moving region based on the output signal, from the solid-state imaging element 344, acquired from the storage unit 346 of the motion detection sensor 34. Specifically, the motion detector 14 integrates the output signals, from the solid-state imaging element 344, acquired from the storage unit 346. That is, the motion detector 14 integrates the output signals (event detection signals) during the output periods of the light reception pulse signals $\phi_0$, $\phi_{180}$, $\phi_{90}$, and $\phi_{270}$. As a result, the motion detector 14 can estimate the object moving region. The object moving region is a range which pixels which have detected an address event (pixels which have detected a change in the amount of light exceeding a predetermined threshold value) are present in the pixel map of the solid-state imaging element 344.

As a result of the estimation, in a case where there is no object moving region (step S4: No), the process by the distance measuring device 10 proceeds to step S7, and the depth map filter processing unit 22 performs a filter process on the depth map by using the reliability map generated in step S2 (step S7). Thereafter, the process by the distance measuring device 10 proceeds to step S8 described later.

On the other hand, in a case where there is the object moving region (step S4: Yes), in step S5, the reliability map, based on the distance data, generated by the signal processing unit 12 is corrected by the reliability correction unit 16 based on the object moving region. Specifically, the reliability map is input from the signal processing unit 12 to the reliability correction unit 16, and the object moving region data is input from the motion detector 14. The reliability correction unit 16 corrects the reliability map by combining this data with the reliability map.

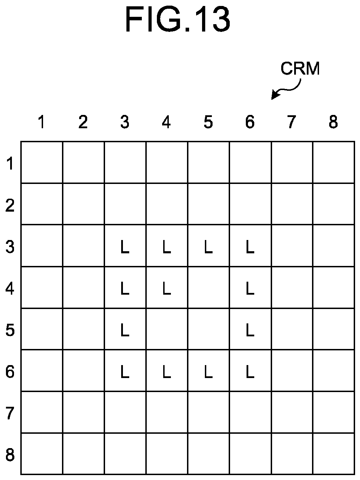

FIG. 13 is an explanatory diagram for explaining an example of a corrected reliability map. In the corrected reliability map CRM illustrated in FIG. 13, the number of pixels indicated by "L" indicating that the reliability is low is increased as compared with that in the original reliability map RM (FIG. 12). It should be noted that 8 pixels (the 3rd column in the 3rd row, the 4th column in the 3rd row, the 5th column in the 3rd row, the 6th column in the 3rd row, the 3rd column in the 4th row, the 6th column in the 4th row, the 3rd column in the 5th row, the 6th column in the 5th row, the 3rd column in the 6th row, the 4th column in the 6th row, the 5th column in the 6th row, and the 6th column in the 6th row) having the distance data of 1 in the depth map DM of FIG. 11 have low reliability. That is, in the reliability map RM based on the depth map DM, it is estimated that the eight pixels whose reliability was determined not to be low correspond to the object moving region by the motion detector 14, and it can be seen that the reliability is lowered based on this. In other words, from the distance data based on the distance measurement signal from the distance measurement sensor 32 and the reliability based on this, the error caused by the movement of the object cannot be grasped, but it can be said that the error is found out by the object moving region estimated by the motion detector 14 based on the event detection signal of the motion detection sensor 34. Such an effect will be described in detail later.

Note that, specifically, for a pixel determined to have low reliability, the value of the reliability may be lowered, or a predetermined tag indicating that the reliability is low may be attached. Furthermore, in FIG. 13, pixels in blank indicate high reliability.

Next, in the present embodiment, the depth map filter processing unit 22 performs a filter process on the depth map based on the corrected reliability map (step S6). Subsequently, based on the depth map subjected to the filter process, the map generation unit 24 generates an environmental map around the movable body on which the distance measuring device 10 is mounted, and/or the obstacle detector 26 detects that there is an obstacle in the space corresponding to the pixel determined to have low reliability (step S7).

[Effects of distance measuring method according to first embodiment]

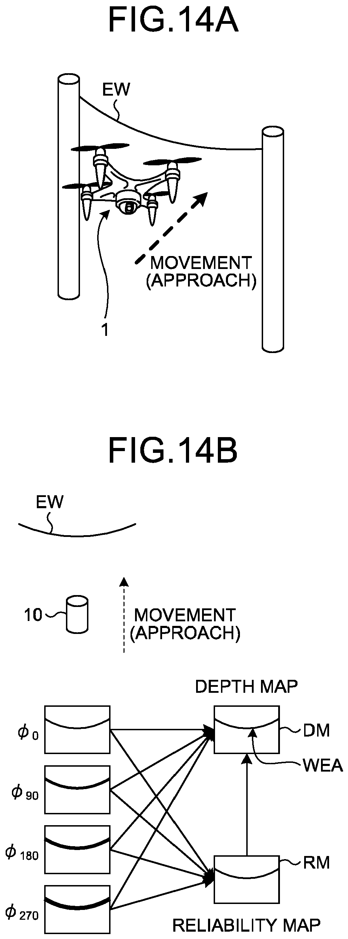

Next, the effects exhibited by the distance measuring method according to the first embodiment will be described in comparison with the distance measuring method according to the comparative example with reference to FIGS. 14A to 16. The comparative example is an example in which the distance measurement sensor 32 is used. Note that the following description also serves as a description of the effect achieved by the distance measuring device 10 (FIG. 1) according to the first embodiment. Furthermore, in the following description, for convenience, it is assumed that the distance measuring device 10 is mounted on a drone as a movable body. Here, the drone refers to a flying body that can horizontally move and vertically move by remote control or autonomous movement control. Further, the drone is mainly an unmanned flying body, but may be a manned flying body.

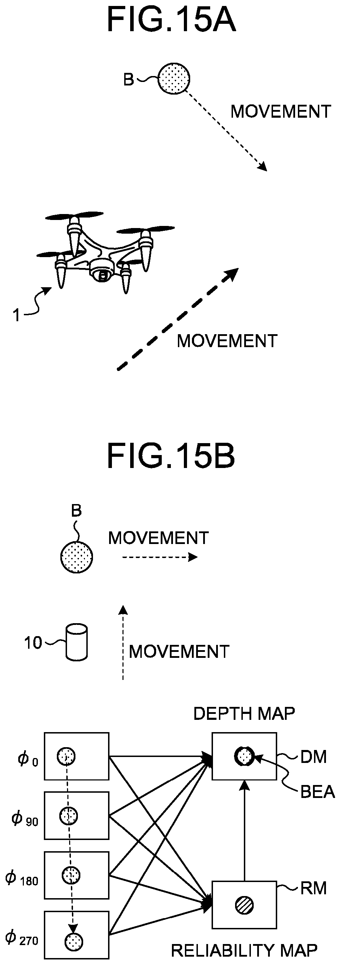

FIGS. 14A and 14B and FIGS. 15A and 15B are explanatory diagrams for explaining the effect of the distance measuring method according to the comparative example. FIGS. 14A and 14B illustrate an example of a case where a distance to an object whose position is fixed is measured by a distance measuring device mounted on a movable body.

Referring to FIG. 14A, a drone 1 approaches an electric wire EW as an object around the drone 1 during flight. The distance measurement sensor 32 (not illustrated in FIG. 14A) mounted on the drone 1 emits pulsed emission light from the light source unit 325 (FIG. 2) and receives reflected light reflected by the electric wire EW. The charges generated by the light receiving unit 326 due to the received reflected light are output corresponding to light reception pulse signals having phase differences of 0°, 90°, 180°, and 270°. Here, assuming that an image is generated (or a luminance map is generated) by the charge, of each pixel, output corresponding to each light reception pulse signal, the image differs according to the phase difference as illustrated in the lower side of FIG. 14B. This is because, as illustrated in the upper side of FIG. 14B, while the drone 1 is approaching the electric wire EW (particularly at a high speed), the output timing of the charge is delayed due to the phase shift. Specifically, the electric wire EW appears to gradually become thicker with the phase shift. In a case where the depth map DM as schematically illustrated in the figure is generated based on the distance measurement signal from the distance measurement sensor 32, there is a possibility that the distance data is incorrect in the contour WEA of the electric wire EW, for example. In addition, also in the reliability map RM based on the depth map DM, for example, the reliability in the contour WEA of the electric wire EW may be lowered. That is, the distance measurement signal from the distance measurement sensor 32 alone cannot make it possible to grasp that the wire appears thick because the distance measurement signal approaches the electric wire EW, and the electric wire EW may be erroneously recognized as being still far away.

FIGS. 15A and 15B illustrate examples of a case where a distance to a moving object is measured by a distance measuring device mounted on a movable body.

In FIG. 15A, a ball B as a surrounding object crosses in front of the flying drone 1. Even in this case, the position of ball B in the image is shifted as illustrated in the lower part of FIG. 15B because the light reception pulse signal is shifted for each phase while ball B moves as illustrated in the upper part of FIG. 15B. Such a shift corresponds to motion blur in a general imaging sensor. When such motion blur occurs, whether in particular the contour BEA of the ball B is correctly measured may not be determined in the depth map DM, and a decrease in reliability of the contour BEA may not be recognized in the reliability map RM. As a result, even though the ball B is near the drone 1, it may be erroneously recognized as being far away.

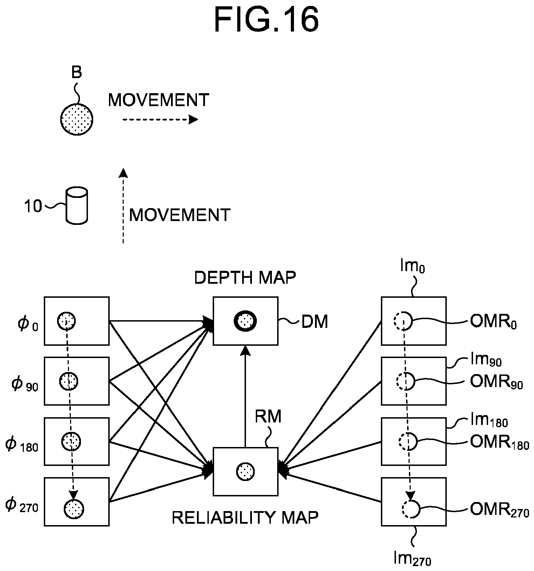

Next, an effect of the distance measuring method according to the first embodiment will be described. FIG. 16 is an explanatory diagram for describing an effect of the distance measuring method according to the first embodiment.

According to the distance measuring method according to the first embodiment, as illustrated in FIG. 16, the storage unit 346 of the motion detection sensor 34 is referred to in synchronization with the output of the charges generated in the light receiving unit 326 corresponding to the light reception pulse signals $\phi_0$, $\phi_{180}$, $\phi_{90}$, and $\phi_{270}$, and the output signal stored in the storage unit 346 is read out to the motion detector 14. The motion detector 14 integrates the read output signals to generate images $Im_0$, $Im_{90}$, $Im_{180}$, and $Im_{270}$ corresponding to the light reception pulse signals $\phi_0$, $\phi_{180}$, $\phi_{90}$, and $\phi_{270}$. In the images $Im_0$, $Im_{90}$, $Im_{180}$, and $Im_{270}$, the object moving regions $OMR_0$, $OMR_{90}$, $OMR_{180}$, and $OMR_{270}$ are identified (in a case where it is not particularly necessary to distinguish them, it is simply referred to as an object moving region OMR) based on the position, time stamp, and polarity of the pixel, included in the read output signal, that has detected a change in the light amount exceeding the predetermined threshold value. Note that, in the object moving region OMR illustrated in FIG. 16, a solid line portion (the right side of each object moving region OMR) indicates that the polarity has changed from dark to bright, and a dotted line portion (the left side of each object moving region OMR) indicates that the polarity has changed from bright to dark.

In a case where an object moving around a movable body is imaged by the solid-state imaging element 344 of the motion detection sensor 34, a pixel that receives light from a central portion of the object at a certain moment with a predetermined amount of light can receive light with substantially the same amount of light at a next moment even if the object is moving. On the other hand, in the pixel that receives the light from the contour of the object, the light amount of the received light greatly changes at the next moment. This is because the contour of the object moves from the pixel to another pixel as the object moves. That is, the light received by the pixel changes from the light from the contour of the object to the light from the background or the like, whereby the light amount greatly changes. In contrast, in a case where a pixel receives light from a background at a certain moment, when an object enters the background, the pixel receives light from the contour of the object at the next moment, and thus the amount of incident light greatly changes. It is presumed that the pixel (and pixels around the pixel) that has detected such a sudden change in the amount of light and thus has detected an address event is under the influence of motion blur by a moving object.

For example, as disclosed in Patent Literature 1 (JP 2019-75826 A), a method for reducing motion blur itself has been proposed so far, but there is a limit to sufficiently removing motion blur. However, according to the distance measuring device 10 and the distance measuring method according to the embodiment of the present disclosure, the object moving region OMR is identified from the pixel which has detected the address event, the object moving region OMR is associated with the reliability map, and the reliability map is corrected. As a result, it is possible to lower the reliability of the pixel region affected by the motion blur. That is, as compared with a case where the motion blur itself that can occur in the distance measurement sensor is reduced, it is possible to improve the certainty of the reliability map as a whole by identifying a region where the motion blur has occurred and lowering the reliability of the region.

Furthermore, when such a reliability map is used, the map generation unit 24 can generate an environmental map with high reliability regarding the periphery of the movable body. In addition, by using such a reliability map, it is also possible to detect an obstacle by the obstacle detector 26, and thus, it is also possible to easily avoid the obstacle.

[Modification of distance measuring method of first embodiment]

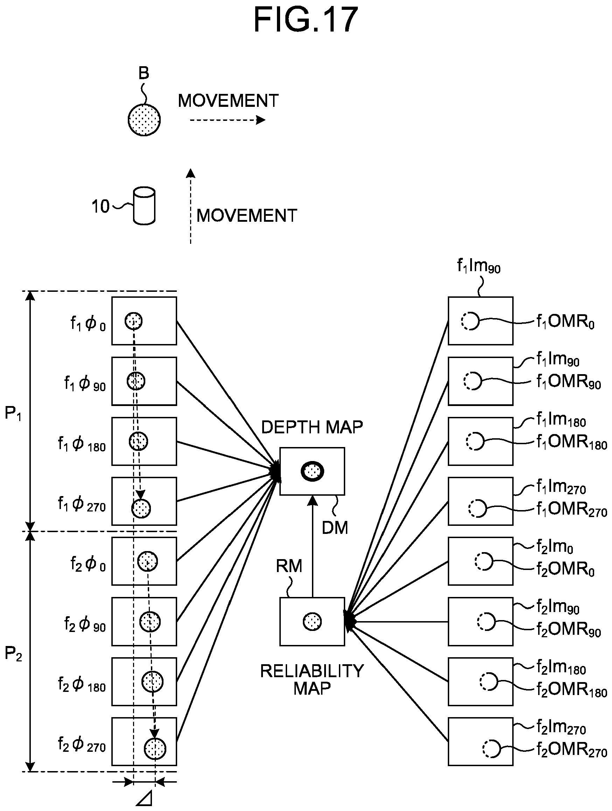

Next, a modification of the distance measuring method of the first embodiment will be described with reference to FIG. 17. In this modification, the period (or the repetition frequency) of the emission light emitted from the light source unit 325 in a pulse shape by the driving unit 327 of the distance measurement sensor 32 is changed every predetermined period (FIG. 2). In the period P1 illustrated in FIG. 17, four light reception pulse signals $f_1\phi_0$, $f_1\phi_{180}$, $f_1\phi_{90}$, and $f_1\phi_{270}$ having phase differences of 0°, 180°, 90°, and 270°, respectively, with respect to one pulse of the emission light emitted at the repetition frequency $f_1$ are output to the light receiving unit 326. In the next period P2, four light reception pulse signals $f_2\phi_0$, $f_2\phi_{180}$, $f_2\phi_{90}$, and $f_2\phi_{270}$ having phase differences of 0°, 180°, 90°, and 270°, respectively, with respect to one pulse of the emission light emitted at the repetition frequency $f_2$ are output to the light receiving unit 326. The distance measurement signals are generated based on the amount of charges output from the light receiving unit 326 by the eight light reception pulse signals, and the signal processing unit 12 calculates distance data and generates a depth map and a reliability map.

On the other hand, the motion detector 14 generates the images $f_1Im_0$, $f_1Im_{90}$, $f_1Im_{180}$, $f_1Im_{270}$, $f_2Im_0$, $f_2Im_{90}$, $f_2IM_{180}$, and $f_2Im_{270}$ corresponding to the light reception pulse signals $f_1\phi_0$, $f_1\phi_{90}$, $f_1\phi_{180}$, $f_1\phi_{270}$, $f_2\phi_0$, $f_2\phi_{90}$, $f_2\phi_{180}$, and $f_2\phi_{270}$, and identifies the object moving regions $f_1OMR_0$, $f_1OMR_{90}$, $f_1OMR_{180}$, $f_1OMR_{270}$, $f_2OMR_0$, $f_2OMR_{90}$, $f_2OMR_{180}$, and $f_2OMR_{270}$ in each image.

The reliability map RM is corrected based on the object moving regions $f_1OMR_0$, $f_1OMR_{90}$, $f_1OMR_{180}$, $f_1OMR_{270}$, $f_2OMR_0$, $f_2OMR_{90}$, $f_2OMR_{180}$, and $f_2OMR_{270}$.

In the present modification, since the difference in time of the light reception pulse signal between the initial light reception pulse signal $f_1\phi_0$ and the last light reception pulse signal $f_2\phi_{270}$ increases, the deviation Δ of the corresponding image (luminance map) illustrated in FIG. 17 also increases. For this reason, by analogy with the previous comparative example, there is a possibility that the influence of motion blur increases in the distance measurement sensor 32.

However, according to the distance measuring device and the distance measuring method of the present disclosure, the object moving region is identified corresponding to the eight light reception pulse signals, and the reliability map is corrected based on the identified object moving region. Therefore, as understood from the above description, it is possible to cope with the occurrence of motion blur.

Note that, in the object moving regions $f_1OMR_0$, $f_1OMR_{90}$, $f_1OMR_{180}$, $f_1OMR_{270}$, $f_2OMR_0$, $f_2OMR_{90}$, $f_2OMR_{180}$, and $f_2OMR_{270}$, a solid line portion (the right side of each of the object moving regions $OMR_0$, $OMR_{90}$, $OMR_{180}$, $OMR_{270}$) indicates that the polarity has changed from dark to bright, and a dotted line portion (the left side of each object moving region $OMR_0$, $OMR_{90}$, $OMR_{180}$, $OMR_{270}$) indicates that the polarity has changed from bright to dark. In addition, the frequency $f_1$ may be, for example, 100 MHz, and the frequency $f_2$ may be, for example, 10 MHz. By changing the repetition frequency, it is possible to expand the distance measuring range (from near to far) of the distance measuring device 10.

(Second embodiment)

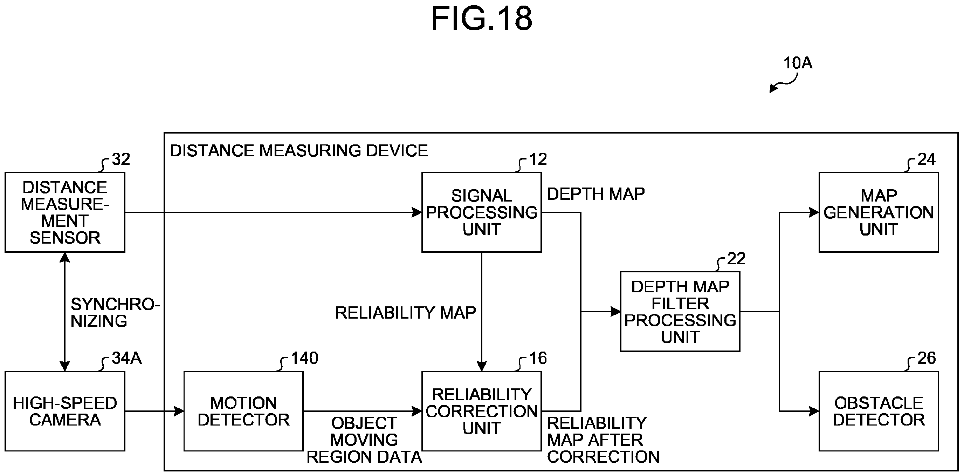

Next, a distance measuring device according to a second embodiment of the present disclosure will be described with reference to FIG. 18. As illustrated, a distance measuring device 10A according to the second embodiment includes the signal processing unit 12, a motion detector 140, and the reliability correction unit 16, and may include the depth map filter processing unit 22, the map generation unit 24, and the obstacle detector 26. Furthermore, the distance measurement sensor 32 and a high-speed camera 34A are electrically connected to the distance measuring device 10A according to the present embodiment. That is, the distance measuring device 10A according to the second embodiment is different from the distance measuring device 10 according to the first embodiment in that the high-speed camera 34A is applied instead of the motion detection sensor 34 (DVS) in the distance measuring device 10 according to the first embodiment, and the motion detector 140 is included instead of the motion detector 14. Other configurations are common in the two embodiments.

Here, as the high-speed camera 34A, a camera (for example, a camera capable of capturing an image of one frame every time a light reception pulse signal is input) capable of performing high-speed imaging as compared with the pulse frequency of the emission light emitted from the light source unit 325 of the distance measurement sensor 32 can be used. Specifically, as the high-speed camera 34A, a camera having a frame rate of 1000 fps (frame per second) to 10,000 fps can be used. Furthermore, in a case where the high-speed camera 34A is used, frame data is input to the motion detector 14. The motion detector 14 performs a process based on a predetermined algorithm on the frame data, and identifies a pixel region where motion blur is considered to occur due to occurrence of a predetermined motion or more.

For example, the motion detector 14 can detect the object moving region using a known motion vector detection technique. For example, the motion detector 14 performs pattern matching between a target block and a reference block while moving the reference block of M pixels × N pixels in a reference frame temporally before the target frame within a predetermined range with respect to the target block of M pixels × N pixels in the target frame. The motion detector 14 calculates a difference between the target block and the reference block by the pattern matching, and detects the motion vector based on the position of the reference block where the minimum difference is detected. For example, when the size of the motion vector is equal to or larger than a predetermined value, the motion detector 14 can determine that the target block includes the object moving region. In this way, the object moving region is obtained by the motion detector 14. Based on this, the reliability correction unit 16 can correct the reliability map input from the signal processing unit 12. Note that the depth map filter processing unit 22, the map generation unit 24, and the obstacle detector 26 provided in the distance measuring device according to the present embodiment can operate similarly to the corresponding units in the distance measuring device 10 according to the first embodiment.

As described above, according to the distance measuring device 10A according to the second embodiment, the reliability map is corrected based on the object moving region identified by applying the high-speed camera 34A. Therefore, similarly to the distance measuring device 10 according to the first embodiment, it is possible to lower the reliability of the pixel region affected by the motion blur. In addition, by using such a reliability map, the map generation unit 24 can generate an environmental map with high reliability regarding the periphery of the movable body. In addition, by using such a reliability map, it is also possible to detect an obstacle by the obstacle detector 26, and thus, it is also possible to easily avoid the obstacle. Furthermore, according to the high-speed camera 34A, it is also possible to acquire an image of an object.

(Third embodiment)

[Configuration of distance measuring device according to third embodiment]

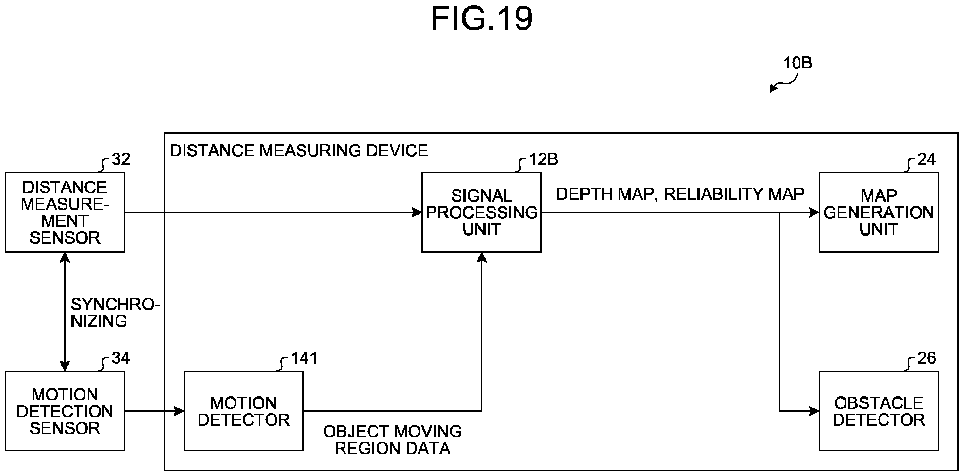

Next, a distance measuring device according to a third embodiment of the present disclosure will be described. FIG. 19 is a functional block diagram of an example for explaining functions of the distance measuring device according to the third embodiment. As illustrated, a distance measuring device 10B according to the third embodiment includes a signal processing unit 12B and a motion detector 141. In addition, the distance measuring device 10B according to the present embodiment is provided with the map generation unit 24 and the obstacle detector 26. Furthermore, also in the present embodiment, the distance measurement sensor 32 and the motion detection sensor 34 are electrically connected to the distance measuring device 10B.

[Distance measuring method according to third embodiment]

In the above-described distance measuring device 10B, the object moving region data generated by the motion detector 14 is input to the signal processing unit 12B.

The signal processing unit 12B performs a filter process of converting the depth map into a format for reducing the influence of the object based on the object moving region data. That is, the distance data of the pixel corresponding to the object moving region is corrected. Further, the depth map after the filter process is applied to a reliability map based on the distance data. The processing performed thereafter in the map generation unit 24 and the obstacle detector 26 is the same as the processing in the corresponding units in the distance measuring device 10 according to the first embodiment.

In the distance measuring device and the distance measuring method according to the third embodiment, since the object moving region data generated by the motion detector 14 is reflected in the depth map, it is possible to grasp a pixel region affected by motion blur. Therefore, it is possible to appropriately deal with the occurrence of motion blur according to the relative speed between the distance measuring device 10B (distance measurement sensor 32) and the object.

Although the present disclosure is described with reference to some embodiments, the present disclosure is not limited to the above-described embodiments, and can be variously changed and modified.

In the distance measuring devices according to the first to third embodiments, the number of pixels in the solid-state imaging element 344 in the motion detection sensor 34 is the same as the number of pixels in the pixel array of the light receiving unit 326 in the distance measurement sensor 32, and the plurality of former pixels and the plurality of latter pixels are associated in advance. However, the number of pixels of the pixel array of the light receiving unit 326 in the distance measurement sensor 32 may not be the same as the number of pixels of the solid-state imaging element 344 in the motion detection sensor 34. Here, in a case where the number of pixels of the solid-state imaging element 344 is larger, for example, a plurality of pixels 20 of the solid-state imaging element 344 may be associated with one pixel of a pixel array of the light receiving unit 326 in the distance measurement sensor 32. Conversely, in a case where the number of pixels of the pixel array of the light receiving unit 326 is larger, a plurality of pixels of the pixel array of the light receiving unit 326 may be associated with one pixel of the solid-state imaging element 344.

Furthermore, in the distance measuring device 10 (10A, 10B) according to the above-described embodiment, the distance measurement sensor 32 and the motion detection sensor 34 are electrically connected to the distance measuring device 10, but the present invention is not limited thereto, and the distance measurement sensor 32 and the motion detection sensor 34 may be integrated with the distance measuring device 10. Furthermore, the distance measurement sensor 32 and the signal processing unit 12 of the distance measuring device 10 may be integrated, and the driving unit 327 of the distance measurement sensor 32 may be provided in the signal processing unit 12. Similarly, the motion detection sensor 34 may be integrated with the motion detector 14, and either or both of the controller 348 and the storage unit 346 of the motion detection sensor 34 may be provided in the motion detector 14.

With respect to the distance measuring method according to the first embodiment and the modification thereof, the reliability correction unit 16 can correct the distance data of the pixel corresponding to the object moving region based on the distance data of pixels around the pixel. For example, the distance data of the pixel may be corrected by interpolating the distance data in two pixels sandwiching the pixel by a predetermined method. Note that, in a case where the signal processing unit 12 has the function of the reliability correction unit 16, the signal processing unit may similarly correct the distance data. Furthermore, in the distance measuring device 10A according to the second embodiment, the distance data may be stored using the motion vector detected by the motion detector 140.

In addition, it is a matter of course that the distance measuring method according to the first embodiment can be performed using the distance measuring device according to the second to third embodiments by appropriately changing or modifying the distance measuring method according to the first embodiment.

Note that the distance measuring device according to the first to third embodiments can be realized by a processor including hardware such as an application specific integrated circuit (ASIC), a programmable gate array (PGA), and a field programmable gate array (FPGA), for example. Furthermore, the distance measuring device according to the first to third embodiments may be configured as a computer including a CPU, a ROM, and a RAM. Furthermore, the signal processing unit 12, the motion detector 14, the reliability correction unit 16, and the like in the distance measuring device according to the first to third embodiments may be realized by individual processors. Even in these cases, the distance measuring devices according to the first to third embodiments can be realized by a processor as a whole. The processor can execute the distance measuring method according to the first embodiment described above according to the program and various pieces of data. The programs and various pieces of data may be downloaded in a wired or wireless manner from a non-transitory computer-readable storage medium such as a hard disk drive, a server, or a semiconductor memory.

Therefore, the distance measuring device according to the present disclosure may be expressed as including a processor including hardware, where the processor is configured to calculate distance data indicating a distance to an object, calculate reliability of the distance data, detect a motion of the object, and correct either the distance data or the reliability based on a detection result by the motion detector.

<Example of application to movable body>

The technology according to the present disclosure (the present technology) can be applied to various products.

For example, the technology according to the present disclosure may be further applied to a device mounted on any of various movable bodies such as automobiles, electric cars, hybrid electric cars, motorcycles, bicycles, personal mobility, airplanes, drones, ships, and robots.

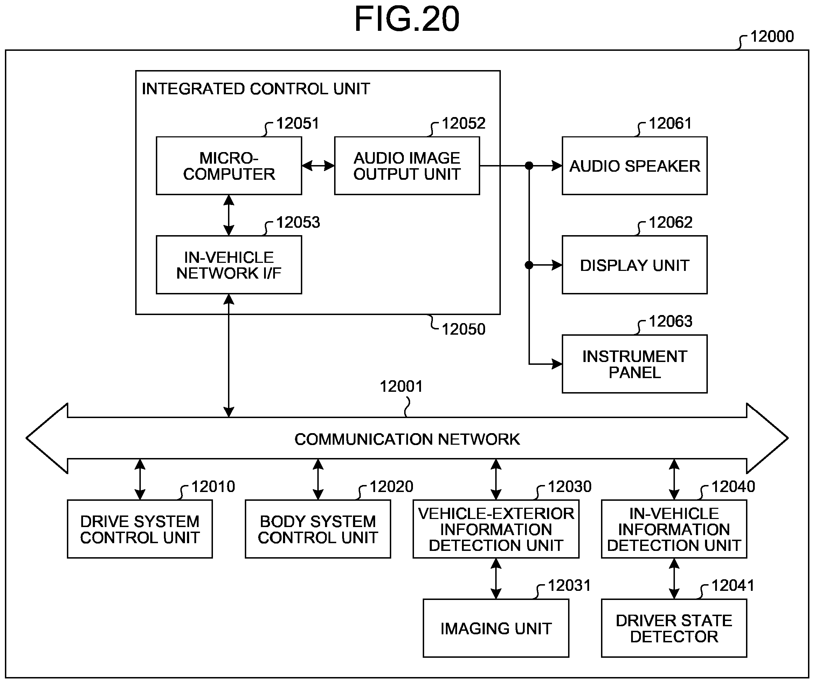

FIG. 20 is a block diagram illustrating a schematic configuration example of a vehicle control system, which is an example of a movable body control system to which the technique according to the present disclosure can be applied.

A vehicle control system 12000 includes a plurality of electronic control units connected via a communication network 12001. In the example illustrated in FIG. 20, the vehicle control system 12000 includes a drive system control unit 12010, a body system control unit 12020, a vehicle-exterior information detection unit 12030, an in-vehicle information detection unit 12040, and an integrated control unit 12050. Further, as the functional configuration of the integrated control unit 12050, a microcomputer 12051, an audio image output unit 12052, and an in-vehicle network interface (I/F) 12053 are illustrated.

The drive system control unit 12010 controls the operation of the device related to the drive system of the vehicle according to various programs. For example, the drive system control unit 12010 serves as a driving force generation device that generates the driving force of the vehicle such as an internal combustion engine or a driving motor, a driving force transmission mechanism that transmits the driving force to the wheels, a steering mechanism for adjusting a steering angle of the vehicle, and a control device such as a braking device that generates a braking force of the vehicle.

The body system control unit 12020 controls the operation of various devices mounted on the vehicle body according to various programs. For example, the body system control unit 12020 functions as a control device for a keyless entry system, a smart key system, a power window device, or various lamps such as a head lamp, a back lamp, a brake lamp, a blinker, and a fog lamp. In this case, the body system control unit 12020 may receive radio waves transmitted from a portable device that substitutes for the key or signals of various switches. The body system control unit 12020 receives the input of these radio waves or signals and controls a door lock device, a power window device, a lamp, and the like of the vehicle.

The vehicle-exterior information detection unit 12030 detects information outside the vehicle equipped with the vehicle control system 12000. For example, an imaging unit 12031 is connected to the vehicle-exterior information detection unit 12030. The vehicle-exterior information detection unit 12030 causes the imaging unit 12031 to capture an image of the outside of the vehicle and receives the picked up image. The vehicle-exterior information detection unit 12030 may perform the object detection process or the distance detection process of detecting a person, a vehicle, an obstacle, a sign, or characters on the road surface based on the received image.

The imaging unit 12031 is an optical sensor that receives light to output an electrical signal according to the amount of the light received. The imaging unit 12031 can output an electrical signal as an image or can output it as distance measurement information. Further, the light received by the imaging unit 12031 may be visible light or invisible light such as infrared light.

The in-vehicle information detection unit 12040 detects in-vehicle information. For example, a driver state detector 12041 that detects the driver's state is connected to the in-vehicle information detection unit 12040. The driver state detector 12041 includes, for example, a camera that captures the driver, and the in-vehicle information detection unit 12040 may calculate the degree of fatigue or concentration of the driver, or may determine whether the driver is dozing based on the detection information input from the driver state detector 12041.

The microcomputer 12051 can calculate the control target value of the driving force generation device, the steering mechanism, or the braking device based on the information inside and outside the vehicle acquired by the vehicle-exterior information detection unit 12030 or the in-vehicle information detection unit 12040 to output a control command to the drive system control unit 12010. For example, the microcomputer 12051 can perform cooperative control for the purpose of realizing a function of an advanced driver assistance system (ADAS) including vehicle collision avoidance or impact mitigation, follow-up driving based on inter-vehicle distance, vehicle speed maintenance driving, vehicle collision warning, or vehicle lane deviation warning.

In addition, based on the information around the vehicle acquired by the vehicle-exterior information detection unit 12030 or the in-vehicle information detection unit 12040, the microcomputer 12051 can perform cooperative control for the purpose of automatic driving or the like in which the vehicle travels autonomously without depending on the operation of the driver by controlling the driving force generation device, the steering mechanism, the braking device, and the like.

Further, the microcomputer 12051 can output a control command to the body system control unit 12020 based on the information outside the vehicle acquired by the vehicle-exterior information detection unit 12030. For example, the microcomputer 12051 can control the head lamps according to the position of the preceding vehicle or the oncoming vehicle detected by the vehicle-exterior information detection unit 12030 to perform cooperative control for the purpose of anti-glare such as switching the high beam to the low beam.

The audio image output unit 12052 transmits an output signal of at least one of the audio and the image to an output device capable of visually or audibly notifying the passenger or the outside of the vehicle of information. In the example of FIG. 20, an audio speaker 12061, a display unit 12062, and an instrument panel 12063 are exemplified as output devices. The display unit 12062 may include, for example, at least one of an onboard display and a heads-up display.

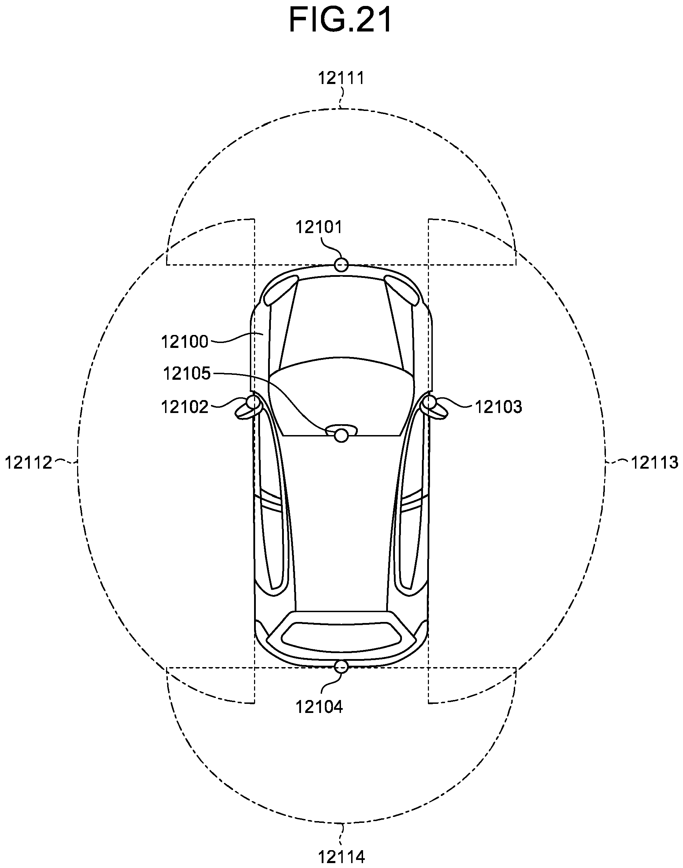

FIG. 21 is a diagram illustrating an example of the installation position of the imaging unit 12031.

In FIG. 21, imaging units 12101, 12102, 12103, 12104, and 12105 are included as the imaging unit 12031.

For example, the imaging units 12101, 12102, 12103, 12104, and 12105 are provided at positions such as the front nose, the side mirrors, the rear bumper, the back door, and the upper part of the windshield in the vehicle interior of a vehicle 12100. The imaging unit 12101 provided on the front nose and the imaging unit 12105 provided on the upper part of the windshield in the vehicle interior mainly acquire an image in front of the vehicle 12100. The imaging units 12102 and 12103 provided on the side mirrors mainly acquire images of the sides of the vehicle 12100. The imaging unit 12104 provided on the rear bumper or the back door mainly acquires an image behind the vehicle 12100. The imaging unit 12105 provided at the upper part of the windshield in the vehicle interior is mainly used to detect a preceding vehicle, a pedestrian, an obstacle, a traffic light, a traffic sign, a lane, or the like.

Note that FIG. 21 illustrates an example of the photographing range of the imaging units 12101 to 12104. An imaging range 12111 indicates the imaging range of the imaging unit 12101 provided on the front nose, imaging ranges 12112 and 12113 indicate the imaging ranges of the imaging units 12102 and 12103 provided on the side mirrors, respectively, and an imaging range 12114 indicates the imaging range of the imaging unit 12104 provided on the rear bumper or the back door. For example, by superimposing the image data imaged by the imaging units 12101 to 12104, a bird's-eye view image of the vehicle 12100 when viewed from above can be obtained.

At least one of the imaging units 12101 to 12104 may have a function of acquiring distance information. For example, at least one of the imaging units 12101 to 12104 may be a stereo camera composed of a plurality of imaging elements, or may be an imaging element having pixels for phase difference detection.

For example, by finding the distance to each three-dimensional object within the imaging ranges 12111 to 12114, and the temporal change of this distance (relative velocity with respect to the vehicle 12100) based on the distance information obtained from the imaging units 12101 to 12104, the microcomputer 12051 can extract, in particular, a three-dimensional object that is the closest three-dimensional object on the traveling path of the vehicle 12100 and that travels in substantially the same direction as the vehicle 12100 at a predetermined speed (for example, 0 km/h or more) as a preceding vehicle. Further, the microcomputer 12051 can set an inter-vehicle distance to be secured in front of the preceding vehicle in advance, and can perform automatic braking control (including follow-up stop control), automatic acceleration control (including follow-up start control), and the like. In this way, cooperative control can be performed for the purpose of automatic driving or the like in which the vehicle travels autonomously without depending on the driver's operation.

For example, the microcomputer 12051 can sort three-dimensional object data related to a three-dimensional object into other three-dimensional objects such as a two-wheeled vehicle, an ordinary vehicle, a large vehicle, a pedestrian, and a utility pole based on the distance information obtained from the imaging units 12101 to 12104 to extract them, and can use them for automatic avoidance of obstacles. For example, the microcomputer 12051 identifies obstacles around the vehicle 12100 as an obstacle that are visible to the driver of the vehicle 12100 and an obstacle that are difficult to see. The microcomputer 12051 can determine the collision risk, which indicates the risk of collision with each obstacle, and when the collision risk is above the set value and there is a possibility of collision, the microcomputer 12051 can provide a driving assistance for collision avoidance by outputting an alarm to the driver via the audio speaker 12061 or the display unit 12062, or by performing forced deceleration and avoidance steering via the drive system control unit 12010.

At least one of the imaging units 12101 to 12104 may be an infrared camera that detects infrared light. For example, the microcomputer 12051 can recognize a pedestrian by determining whether the pedestrian is present in the captured images of the imaging units 12101 to 12104. Such pedestrian recognition includes, for example, a procedure for extracting feature points in captured images of the imaging units 12101 to 12104 as an infrared camera, and a procedure of performing a pattern matching process on a series of feature points indicating the outline of an object to determine whether the object is a pedestrian. The microcomputer 12051 determines that a pedestrian is present in the captured images of the imaging units 12101 to 12104, and when the pedestrian is recognized, the audio image output unit 12052 controls the display unit 12062 to superimpose and display a square contour line for emphasis on the recognized pedestrian. Further, the audio image output unit 12052 may control the display unit 12062 to display an icon or the like indicating the pedestrian at a desired position.

An example of the vehicle control system to which the technique according to the present disclosure can be applied is described above. The technique according to the present disclosure can be applied to the imaging units 12101 to 12105 of the configuration described above. Specifically, the distance measuring devices according to the first to third embodiments (including modifications) can be applied as the imaging units 12101 to 12105. As a result, the reliability map based on the distance measurement result is corrected by the object moving region data based on the result of the motion detection, and the depth map can be corrected by using the corrected reliability map. Therefore, it is possible to appropriately deal with the occurrence of motion blur according to the relative speed between the vehicle 12100 and the object around the vehicle.

Note that, although various effects achieved by the distance measuring device and the distance measuring method according to an embodiment are described above, such effects do not limit the distance measuring device and the distance measuring method of the present disclosure. In addition, all of the various effects may not be exhibited. Further, the distance measuring device and the distance measuring method of the present disclosure may exhibit additional effects not described herein.

The present disclosure can also have the following configurations.

(1) A distance measuring device comprising:

a distance measurement unit that calculates distance data indicating a distance to an object;
a reliability calculation unit that calculates reliability of the distance data;
a motion detector that detects a motion of the object; and
a correction unit that corrects the distance data or the reliability based on a detection result by the motion detector.

According to this configuration, since either the distance data indicating the distance to the object or its reliability is corrected by the detection result of the motion detection unit, the motion of the object can be reflected in the distance data or reliability.

(2) The distance measuring device according to (1), wherein

the distance measurement unit
receives light for each phase according to light emission of a light source, and calculates the distance data based on a light reception signal, for the each phase, output due to light reception for the each phase.

According to this, since the distance data is calculated based on a light reception signal, for the each phase, output due to light reception for the each phase, highly accurate distance measurement is possible.

(3) The distance measuring device according to (1), wherein

the distance measurement unit
receives light for each phase by a plurality of pixels disposed in a matrix according to light emission of a light source, calculates the distance data for each pixel based on a light reception signal, for the each phase, output from the plurality of pixels due to light reception for the each phase, and generates a depth map based on the distance data for the each pixel.

According to this configuration, it is possible to grasp the distance between the movable body on which the distance measuring device is mounted and the surrounding object three-dimensionally.

(4) The distance measuring device according to (3), wherein

the motion detector
identifies an object moving region in an array of the plurality of pixels based on a detection result obtained by detecting a motion of the object.

According to this, it is possible to grasp the motion of the object around the distance measuring device two-dimensionally.

(5) The distance measuring device according to (4), wherein

the distance measurement unit calculates reliability of distance data for each of the plurality of pixels and generates a reliability map corresponding to an array of the plurality of pixels, and
the correction unit corrects the reliability map based on the object moving region when correcting the reliability.

According to this, at around the moving body on which this ranging device is mounted, a reliability map that reflects the area in which the object has moved can be acquire.

(6) The distance measuring device according to (4), wherein

the distance measurement unit calculates reliability of distance data for each of the plurality of pixels and generates a reliability map corresponding to an array of the plurality of pixels, and
the correction unit corrects the reliability map by lowering a value of the reliability of a pixel corresponding to the object moving region when correcting the reliability.

According to this, at around the moving body on which this ranging device is mounted, a reliability map that reflects the area in which the object has moved can be acquire.

(7) The distance measuring device according to (4), wherein

the distance measurement unit calculates reliability of distance data for each of the plurality of pixels and generates a reliability map corresponding to an array of the plurality of pixels, and

the correction unit corrects the reliability map by associating a tag indicating that reliability is low with a pixel corresponding to the object moving region when correcting the reliability.

According to this, at around the moving body on which this ranging device is mounted, a reliability map that reflects the area in which the object has moved can be acquire.

(8) The distance measuring device according to (4), wherein the correction unit corrects the distance data of a pixel corresponding to the object moving region when correcting the distance data.

According to this, uncertain distance data due to measurement error can be corrected.

(9) The distance measuring device according to any one of (1) to (8), wherein

the motion detector

detects a motion of the object based on a detection signal output from a light receiving element, among a plurality of light receiving elements that has received light, in which a change in an amount of received light exceeds a predetermined threshold value.

According to this, the area where the object has moved can be grasped quickly and efficiently.

(10) The distance measuring device according to (3), wherein

the motion detector

identifies a position of a light receiving element, among a plurality of light receiving elements that has received light, in which a change in an amount of received light exceeds a predetermined threshold value, and identifies an object moving region, in which the object has moved, in a pixel map corresponding to the plurality of pixels.

According to this, the area where the object has moved can be grasped two-dimensionally.

(11) The distance measuring device according to (1), further comprising:

a camera capable of capturing an image at a frame rate larger than the number of times emission light is emitted per unit time from a light source, wherein

the motion detector detects a motion of the object based on frame data from the camera.

Even this, the motion detector can detect the motion of the object.

(12) The distance measuring device according to (3), further comprising: a depth map filter processing unit that filters the depth map based on the reliability corrected by the correction unit.

According to this, it becomes easy to generate an environmental map around the moving body on which the distance measuring device is mounted, and it is possible to facilitate the detection of obstacles.

(13) The distance measuring device according to (10), further comprising: a map generation unit that generates an environmental map including the object based on a filtered depth map filtered by a depth map filter processing unit based on the reliability corrected by the correction unit.

According to this, an environmental map can be easily generated.

(14) The distance measuring device according to (10), further comprising: an obstacle detector that detects an obstacle around the distance measuring device based on a filtered depth map filtered by a depth map filter processing unit based on the reliability corrected by the correction unit.

According to this, obstacles can be easily detected.

(15) A distance measuring method executed by a processor, the method comprising:

calculating distance data indicating a distance to an object;
calculating reliability of the distance data;
detecting a motion of the object; and
correcting the distance data or the reliability based on a detection result of the motion of the object.

(16) The distance measuring device according to (1), further including

a distance measurement sensor that receives light reflected from the object irradiated with the emission light from the light source, generates a charge according to the light to output the charge by each of a plurality of driving signals each having a predetermined phase shift with respect to the emission light, in which the distance measurement unit calculates the distance data based on the charge from the distance measurement sensor.

According to such a distance measurement sensor, charges are output by a plurality of driving signals each having a predetermined phase shift with respect to emission light, and distance data is calculated based on the charges, so that distance measurement with high accuracy can be performed.

(17) The distance measuring device according to any one of (1) to (3), further including

an optical sensor that includes a plurality of pixels that receives light from the object to output a detection signal from a pixel, among the plurality of pixels that has received the light, in which an amount of the received light exceeds a predetermined threshold value, in which the motion detector detects the motion of the object based on the detection signal output from the optical sensor.

According to such an optical sensor, since the event detection signal is output only from the pixel that has detected the address event without scanning all the pixels, the occurrence of the address event can be detected at high speed. Although not limited, in a case where the device is used together with the distance measurement sensor of (2), reflected light from an object can be received at a speed corresponding to an output speed (frequency) of charges output by a plurality of driving signals in the distance measurement sensor.

(18) The distance measuring device according to (4), in which the motion detector identifies an object moving region, in which the object has moved, in a pixel map corresponding to the plurality of pixels of the optical sensor based on a position of a pixel that has output the detection signal.

According to this, it is possible to grasp in which region the object is moving in the periphery when viewed from the movable body on which the distance measuring device is mounted.

Reference Signs List

| 1 | DRONE |
|---|---|
| 10, 10A, 10B | DISTANCE MEASURING DEVICE |
| 12, 12B | SIGNAL PROCESSING UNIT |
| 14, 140, 141 | MOTION DETECTOR |
| 16 | RELIABILITY CORRECTION UNIT |
| 22 | DEPTH MAP FILTER PROCESSING UNIT |
| 24 | MAP GENERATION UNIT |
| 26 | OBSTACLE DETECTOR |
| 32 | DISTANCE MEASUREMENT SENSOR |
| 325 | LIGHT SOURCE UNIT |
| 326 | LIGHT RECEIVING UNIT |
| 327 | DRIVING UNIT |
| 34 | MOTION DETECTION SENSOR |
| 342 | OPTICAL SYSTEM |
| 344 | SOLID-STATE IMAGING ELEMENT |
| 346 | STORAGE UNIT |
| 348 | CONTROLLER |
| 110 | ROW DRIVE CIRCUIT |
| 111 | CONTROL CIRCUIT |
| 112 | ARBITER |
| 113 | COLUMN DRIVE CIRCUIT |
| 114 | PIXEL ARRAY UNIT |
| 20 | PIXEL |
| 30 | ADDRESS EVENT DETECTOR |
| 40 | LIGHT RECEIVING UNIT |

| 41 | PIXEL SIGNAL GENERATION UNIT |
|---|---|
| 410 | RESET TRANSISTOR |
| 411 | AMPLIFICATION TRANSISTOR |
| 412 | SELECTION TRANSISTOR |
| 413 | FLOATING DIFFUSION LAYER |
| SEL | SELECTION SIGNAL |
| VSL | VERTICAL SIGNAL LINE |
| 400 | TRANSFER TRANSISTOR |
| 401 | OFG TRANSISTOR |
| 402 | LIGHT RECEIVING ELEMENT |
| 300 | CURRENT-VOLTAGE CONVERSION UNIT |
| 310 | BUFFER AMPLIFIER |
| 320 | SUBTRACTION UNIT |
| 330 | QUANTIZER |
| 321 | CAPACITOR |
| 322 | CAPACITOR |
| 323 | SWITCH UNIT |
| 324 | INVERTER |
| 12100 | VEHICLE |
| 12000 | VEHICLE CONTROL SYSTEM |
| 12001 | COMMUNICATION NETWORK |
| 12030 | VEHICLE-EXTERIOR INFORMATION DETECTION UNIT |
| 12050 | INTEGRATED CONTROL UNIT |
| 12051 | MICROCOMPUTER |
| 12053 | IN-VEHICLE NETWORK I/F |

**Claims**

1. A distance measuring device comprising:

   a distance measurement unit that calculates distance data indicating a distance to an object;
   a reliability calculation unit that calculates reliability of the distance data;
   a motion detector that detects a motion of the object; and
   a correction unit that corrects the distance data or the reliability based on a detection result by the motion detector.

2. The distance measuring device according to claim 1, wherein

   the distance measurement unit
   receives light for each phase according to light emission of a light source, and calculates the distance data based on a light reception signal, for the each phase, output due to light reception for the each phase.

3. The distance measuring device according to claim 1, wherein

   the distance measurement unit
   receives light for each phase by a plurality of pixels disposed in a matrix according to light emission of a light source, calculates the distance data for each pixel based on a light reception signal, for the each phase, output from the plurality of pixels due to light reception for the each phase, and generates a depth map based on the distance data for the each pixel.

4. The distance measuring device according to claim 3, wherein

   the motion detector
   identifies an object moving region in an array of the plurality of pixels based on a detection result obtained by detecting a motion of the object.

5. The distance measuring device according to claim 4, wherein

the distance measurement unit calculates reliability of distance data for each of the plurality of pixels and generates a reliability map corresponding to an array of the plurality of pixels, and
the correction unit corrects the reliability map based on the object moving region when correcting the reliability.

6. The distance measuring device according to claim 4, wherein

the distance measurement unit calculates reliability of distance data for each of the plurality of pixels and generates a reliability map corresponding to an array of the plurality of pixels, and
the correction unit corrects the reliability map by lowering a value of the reliability of a pixel corresponding to the object moving region when correcting the reliability.

7. The distance measuring device according to claim 4, wherein

the distance measurement unit calculates reliability of distance data for each of the plurality of pixels and generates a reliability map corresponding to an array of the plurality of pixels, and
the correction unit corrects the reliability map by associating a tag indicating that reliability is low with a pixel corresponding to the object moving region when correcting the reliability.

8. The distance measuring device according to claim 4, wherein the correction unit corrects the distance data of a pixel corresponding to the object moving region when correcting the distance data.

9. The distance measuring device according to claim 1, wherein

the motion detector
detects a motion of the object based on a detection signal output from a light receiving element, among a plurality of light receiving elements that has received light, in which a change in an amount of received light exceeds a predetermined threshold value.

10. The distance measuring device according to claim 3, wherein

the motion detector
identifies a position of a light receiving element, among a plurality of light receiving elements that has received light, in which a change in an amount of received light exceeds a predetermined threshold value, and identifies an object moving region, in which the object has moved, in a pixel map corresponding to the plurality of pixels.

11. The distance measuring device according to claim 1, further comprising:

a camera capable of capturing an image at a frame rate larger than the number of times emission light is emitted per unit time from a light source, wherein
the motion detector detects a motion of the object based on frame data from the camera.

12. The distance measuring device according to claim 3, further comprising: a depth map filter processing unit that filters the depth map based on the reliability corrected by the correction unit.

13. The distance measuring device according to claim 10, further comprising: a map generation unit that generates an environmental map including the object based on a filtered depth map filtered by a depth map filter processing unit based on the reliability corrected by the correction unit.

14. The distance measuring device according to claim 10, further comprising: an obstacle detector that detects an obstacle around the distance measuring device based on a filtered depth map filtered by a depth map filter processing unit based on the reliability corrected by the correction unit.

15. A distance measuring method executed by a processor, the method comprising:

calculating distance data indicating a distance to an object;
calculating reliability of the distance data;
detecting a motion of the object; and
correcting the distance data or the reliability based on a detection result of the motion of the object.

# FIG.1

FIG.1

10

DISTANCE MEASURING DEVICE

32 DISTANCE MEASURE-MENT SENSOR

12 SIGNAL PROCESSING UNIT — DEPTH MAP

24 MAP GENERATION UNIT

SYNCHRO-NIZING

RELIABILITY MAP

22 DEPTH MAP FILTER PROCESSING UNIT

34 MOTION DETECTION SENSOR

14 MOTION DETECTOR — OBJECT MOVING REGION DATA

16 RELIABILITY CORRECTION UNIT — RELIABILITY MAP AFTER CORRECTION

26 OBSTACLE DETECTOR

EP 4 063 914 A1

22

# FIG.2

32

DISTANCE MEASUREMENT SENSOR

EMISSION LIGHT

325
LIGHT SOURCE UNIT

327
DRIVING UNIT

SIGNAL PROCESSING UNIT

REFLECTED LIGHT

326
LIGHT RECEIVING UNIT

# FIG.3

EP 4 063 914 A1

# FIG.4

MOTION DETECTION SENSOR $\qquad$ 34

342 → SOLID-STATE IMAGING ELEMENT $\qquad$ 344

STORAGE UNIT $\qquad$ 346

CONTROLLER $\qquad$ 348

# FIG.5

344

CONTROL CIRCUIT — 111

110

ROW DRIVE CIRCUIT

PIXEL ARRAY UNIT — 114

ARBITER — 112

COLUMN DRIVE CIRCUIT

113

# FIG.6

EP 4 063 914 A1

# FIG.7

EP 4 063 914 A1

# FIG.8

30

CURRENT-VOLTAGE CONVERSION UNIT — 300
301
302
303
$V_{bias}$
$V_o$
FROM PIXEL

310

SUBTRACTION UNIT — 320
321 C1
322 C2
323
324 -A
$V_{diff}$

330 QUANTIZER

EVENT DETECTION SIGNAL

# FIG.9

# FIG.10

START

S1
ACQUIRE DISTANCE MEASUREMENT SIGNAL FROM DISTANCE MEASUREMENT SENSOR, AND ACQUIRE OUTPUT SIGNAL FROM SOLID-STATE IMAGING ELEMENT FROM STORAGE UNIT OF MOTION DETECTION SENSOR IN SYNCHRONIZATION WITH THE ACQUISITION

S2
GENERATE DEPTH MAP AND RELIABILITY MAP BASED ON DISTANCE MEASUREMENT SIGNAL

S3
ESTIMATE OBJECT MOVING REGION FROM OUTPUT SIGNAL ACQUIRED FROM STORAGE UNIT OF MOTION DETECTION SENSOR

S4
OBJECT MOVING REGION EXISTS?

NO

YES

S5
CORRECT RELIABILITY MAP BASED ON MOVING BODY MOVING REGION

S7
PERFORM FILTER PROCESS ON DEPTH MAP BASED ON RELIABILITY MAP

S6
PERFORM FILTER PROCESS ON DEPTH MAP BASED ON CORRECTED RELIABILITY MAP

S8
CREATE ENVIRONMENTAL MAP AND/OR DETECT OBSTACLES BASED ON FILTERED DEPTH MAP

END

# FIG.11

DM

|   | 1 | 2 | 3 | 4 | 5 | 6 | 7 | 8 |
|---|---|---|---|---|---|---|---|---|
| 1 | 100 | 100 | 100 |  |  |  |  |  |
| 2 | 100 |  |  |  |  |  |  |  |
| 3 |  |  | 1 | 1 | 1 | 1 |  |  |
| 4 |  |  | 1 | 10 | 10 | 1 |  |  |
| 5 |  |  | 1 | 10 | 10 | 1 |  |  |
| 6 |  |  | 1 | 1 | 1 | 1 |  |  |
| 7 |  |  |  |  |  |  |  |  |
| 8 |  |  |  |  |  |  |  |  |

# FIG.12

RM

# FIG.13

# FIG.14A

EW

MOVEMENT
(APPROACH)

1

# FIG.14B

EW

10

MOVEMENT
(APPROACH)

DEPTH MAP

$\phi_0$

$\phi_{90}$

$\phi_{180}$

$\phi_{270}$

DM

WEA

RM

RELIABILITY MAP

# FIG.15A

B

MOVEMENT

1

MOVEMENT

# FIG.15B

B

MOVEMENT

10

MOVEMENT

DEPTH MAP

$\phi_0$

$\phi_{90}$

$\phi_{180}$

$\phi_{270}$

DM

BEA

RM

RELIABILITY MAP

# FIG.16

B

MOVEMENT

10

MOVEMENT

DEPTH MAP

$Im_0$

$\phi_0$

$\phi_{90}$

$\phi_{180}$

$\phi_{270}$

DM

RM

RELIABILITY MAP

$OMR_0$

$Im_{90}$
$OMR_{90}$

$Im_{180}$
$OMR_{180}$

$OMR_{270}$

$Im_{270}$

# FIG.17

# FIG.18

10A

DISTANCE MEASURING DEVICE

DISTANCE MEASURE-MENT SENSOR ~32

SIGNAL PROCESSING UNIT ~12 → DEPTH MAP

MAP GENERATION UNIT ~24

SYNCHRO-NIZING

RELIABILITY MAP

DEPTH MAP FILTER PROCESSING UNIT ~22

HIGH-SPEED CAMERA ~34A

MOTION DETECTOR ~140 → OBJECT MOVING REGION DATA

RELIABILITY CORRECTION UNIT ~16 → RELIABILITY MAP AFTER CORRECTION

OBSTACLE DETECTOR ~26

# FIG.19

# FIG.20

INTEGRATED CONTROL UNIT

┌─ 12051
MICRO-COMPUTER

┌─ 12052
AUDIO IMAGE OUTPUT UNIT

┌─ 12061
AUDIO SPEAKER

┌─ 12053
IN-VEHICLE NETWORK I/F

┌─ 12062
DISPLAY UNIT

┌─ 12063
INSTRUMENT PANEL

└─ 12050

12000

12001

COMMUNICATION NETWORK

┌─ 12010
DRIVE SYSTEM CONTROL UNIT

┌─ 12020
BODY SYSTEM CONTROL UNIT

┌─ 12030
VEHICLE-EXTERIOR INFORMATION DETECTION UNIT

┌─ 12040
IN-VEHICLE INFORMATION DETECTION UNIT

┌─ 12031
IMAGING UNIT

┌─ 12041
DRIVER STATE DETECTOR

EP 4 063 914 A1

# FIG.21

## INTERNATIONAL SEARCH REPORT

| International application No. |
|---|
| PCT/JP2020/042211 |

### A. CLASSIFICATION OF SUBJECT MATTER
Int.Cl. G01S17/89(2020.01)i
FI: G01S17/89

According to International Patent Classification (IPC) or to both national classification and IPC

### B. FIELDS SEARCHED
Minimum documentation searched (classification system followed by classification symbols)
Int.Cl. G01S7/48-7/51, G01S17/00-17/95

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-239119 A (CANON INC.) 28 November 2013 (2013-11-28), paragraphs [0020]-[0046] | 1, 15 |
| X | JP 2019-191118 A (SONY SEMICONDUCTOR SOLUTIONS CORP.) 31 October 2019 (2019-10-31), paragraphs [0017]-[0035], [0113]-[0121], [0148]-[0183] | 1-3, 9, 12, 15 |
| Y | | 11 |
| Y | JP 2017-86648 A (SONY CORPORATION) 25 May 2017 (2017-05-25), paragraphs [0101]-[0127] | 11 |
| A | US 2014/0211992 A1 (IMIMTEK, INC.) 31 July 2014 (2014-07-31), entire text, all drawings | 1-15 |

☐ Further documents are listed in the continuation of Box C.   ☒ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 13 January 2021 | 02 February 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

43

**INTERNATIONAL SEARCH REPORT**
Information on patent family members

International application No.

PCT/JP2020/042211

| JP 2013-239119 A | 28 November 2013 | US 2013/0308005 A1<br>paragraphs [0039]-[0094] |
|---|---|---|
| JP 2019-191118 A | 31 October 2019 | US 2019/0331776 A1<br>paragraphs [0044]-[0062],<br>[0126]-[0133], [0160]-[0192]<br>EP 3572834 A1<br>CN 110412599 A<br>AU 2019201805 A1<br>KR 10-2019-0125170 A<br>TW 201945757 A |
| JP 2017-86648 A | 25 May 2017 | US 2019/0117052 A1<br>paragraphs [0120]-[0146]<br>WO 2017/082091 A1 |
| US 2014/0211992 A1 | 31 July 2014 | WO 2014/120554 A2 |

Form PCT/ISA/210 (patent family annex) (January 2015)

**EP 4 063 914 A1**

**REFERENCES CITED IN THE DESCRIPTION**

**Patent documents cited in the description**

- JP 2019075826 A